# EUROPEAN PATENT APPLICATION

(11) **EP 4 013 041 A1**
(43) Date of publication of application: **15.06.2022**
(21) Application number: 20856314.8
(22) Date of filing: 22.06.2020
(51) Int. Cl.: H04N 5/765, H04N 5/92

(54) **INFORMATION PROCESSING DEVICE, INFORMATION PROCESSING METHOD, AND PROGRAM**

(30) Priority: 29.08.2019 JP 2019157231
(71) Applicant: Sony Group Corporation, Tokyo 108-0075 (JP)
(72) Inventor: WADA, Masahiro, Tokyo 108-0075 (JP)
(74) Representative: D Young & Co LLP
(86) International application number: PCT/JP2020/024375
(87) International publication number: WO 2021/039057

(57) **Abstract**

An information processing apparatus is to include: a text acquisition unit configured to acquire text data obtained by converting audio data into text; and a data management unit configured to perform a process of receiving image data and audio data related to the image data that are transmitted from an imaging apparatus, and then setting text data acquired for the audio data by the text acquisition unit as metadata corresponding to the image data.

## Description

### TECHNICAL FIELD

The present technology relates to an information processing apparatus, an information processing method, and a program, and particularly relates to technology for handling a case where audio data associated with image data is generated in an imaging apparatus.

### BACKGROUND ART

In a case of a user who uses an imaging apparatus (also referred to as a "camera") at work, such as a professional camera operator or a reporter, an image captured by the imaging apparatus is uploaded at an imaging site to a server (for example, a file transfer protocol (FTP) server) of a newspaper company or the like, by using a communication function of the imaging apparatus.

Patent Document 1 discloses a technique related to uploading an image or the like.

### CITATION LIST

### PATENT DOCUMENT

Patent Document 1: Japanese Patent Application Laid-Open No. 2018-093325

### SUMMARY OF THE INVENTION

### PROBLEMS TO BE SOLVED BY THE INVENTION

Meanwhile, assuming a situation in which an image captured by a professional camera operator or the like as described above is uploaded to a server of a newspaper company or the like, there is a demand for adding description or the like to the image.

For this purpose, for example, a user can input text for the description and add the text as caption data to image data. However, considering the use at a news gathering site or the like in particular, it is desirable to further reduce time and effort.

Therefore, in the present technology, for example, technology is proposed in which, in a case where a professional camera operator or the like uploads an image, audio data can be easily used in a case where description is given by voice.

### SOLUTIONS TO PROBLEMS

An information processing apparatus according to the present technology includes: a text acquisition unit configured to acquire text data obtained by converting audio data into text; and a data management unit configured to perform a process of receiving image data and audio data related to the image data that are transmitted from an external device, and then setting text data acquired for the audio data by the text acquisition unit as metadata corresponding to the image data.

A state is assumed where there are image data and audio data related to the image data. For example, a case is assumed where, when an image is captured by an imaging apparatus, audio data corresponding to image data is generated by audio input of a camera operator, and the audio data is associated with the image. When such image data and audio data are received, text data obtained by converting the audio data into text is written in metadata of the image data.

Note that the external device is assumed to be, for example, an imaging apparatus or a device that relays data from the imaging apparatus, and various devices that can transmit image data and audio data.

In the above-described information processing apparatus, it is conceivable that, in response to reception of image data and audio data related to the image data, the text acquisition unit performs a process of acquiring text data obtained by converting the audio data into text.

For example, in a case where image data and audio data are transferred from the imaging apparatus, a process for conversion into text is to be performed even if there is no particular user operation, with reception of the image data and the audio data as a trigger.

In the above-described information processing apparatus, it is conceivable that the text acquisition unit performs a process of acquiring text data obtained by converting the audio data into text, in response to an operation of designating image data.

For example, in the information processing apparatus, a process for conversion into text is to be performed with, as a trigger, execution of an operation of designating image data imported from the imaging apparatus.

In the above-described information processing apparatus, it is conceivable that the data management unit discriminates audio data to be associated with image data, in accordance with a reception order of image data and audio data.

For example, a correspondence between the image data and the audio data can be specified by determining in advance an order of transfer from the imaging apparatus.

In the above-described information processing apparatus, it is conceivable that the data management unit discriminates audio data to be associated with image data, by using metadata added to the image data.

When the imaging apparatus includes information indicating audio data to be associated with image data in metadata added to the image data, the information processing apparatus side can specify a correspondence between the image data and the audio data.

In the above-described information processing apparatus, it is conceivable that the data management unit performs a process of adding text data for audio data as a part of caption data in metadata added to associated image data.

Text data obtained by converting audio data into text is to be included in a field describing caption data in the metadata.

In the above-described information processing apparatus, it is conceivable that the data management unit performs a process of, in response to acquisition of text data for audio data, automatically adding the text data as a part of caption data in metadata added to associated image data.

Text data obtained by converting audio data into text is to be automatically included in the field describing the caption data in the metadata.

In the above-described information processing apparatus, it is conceivable that the data management unit adds text data after caption data that has already been inputted.

In a case where text data is automatically added to a caption data field in metadata, the text data is added as data after the caption data that has already been described.

In the above-described information processing apparatus, it is conceivable to include a user interface control unit configured to provide a user interface environment that allows turning ON/OFF of a process of automatically adding text data obtained by converting audio data into text as a part of caption data in metadata added to image data.

That is, a user can select whether or not to automatically perform a process of describing text data obtained by converting audio data into text, into the field describing the caption data in the metadata.

In the above-described information processing apparatus, it is conceivable to include an upload processing unit configured to perform a process of uploading image data and metadata to a server device, after the data management unit performs a process of setting text data acquired for the audio data by the text acquisition unit as the metadata corresponding to the image data.

That is, image data obtained by adding text data obtained by converting audio data into text to metadata is to be uploaded to the server device.

In the above-described information processing apparatus, it is conceivable that the upload processing unit performs a process of uploading the audio data as well to the server device in addition to the image data and the metadata.

That is, both an audio file including audio data and an image file including image data and metadata are to be uploaded to the server device.

In the above-described information processing apparatus, it is conceivable that the upload processing unit performs a process of automatically uploading the image data and metadata to the server device, after the data management unit performs a process of setting text data acquired for the audio data by the text acquisition unit as the metadata corresponding to the image data.

For example, after image data, metadata, and audio data are transferred from the imaging apparatus, a series of processing of adding, to the metadata, text data obtained by converting the audio data into text, and uploading the image data and the metadata to the server device is to be automatically performed.

In the above-described information processing apparatus, it is conceivable to include a user interface control unit configured to provide a user interface environment that allows to set whether or not the upload processing unit automatically performs a process of uploading the image data and metadata to the server device, after the data management unit performs a process of setting text data acquired for the audio data by the text acquisition unit as the metadata corresponding to the image data.

That is, the user can select whether or not to automatically perform upload processing.

In the above-described information processing apparatus, it is conceivable that the user interface control unit provides a user interface environment that allows to set whether or not to further upload audio data.

That is, in automatic upload processing, the user can also select whether or not to upload the audio data.

In the above-described information processing apparatus, it is conceivable to include a user interface control unit configured to control to display text data acquired for the audio data by the text acquisition unit.

That is, text data obtained by converting the audio data into text is displayed as text to the user.

In the above-described information processing apparatus, it is conceivable that the user interface control unit provides a user interface environment for audio reproduction to be executed for the audio data.

That is, audio data can also be reproduced as it is as audio.

It is conceivable that the above-described information processing apparatus is a portable terminal device.

For example, processing of a user interface control unit and a communication control unit is to be performed in a portable terminal device such as a smartphone or tablet equipment.

An information processing method according to the present technology includes: text data acquisition processing of acquiring text data obtained by converting audio data into text; and a process of receiving image data and audio data related to the image data that are transmitted from an external device imaging apparatus, and then setting text data acquired for the audio data by the text data acquisition processing as metadata corresponding to the image data.

This configuration makes it easy for the user to use audio data added by the imaging apparatus. An environment in which FTP setting information can be easily registered is achieved.

A program according to the present technology is a program for causing an information processing apparatus to execute processing corresponding to such an information processing method.

As a result, an operation of converting audio data associated with image data into text to use can be executed by various information processing apparatuses.

### BRIEF DESCRIPTION OF DRAWINGS

Fig. 1 is an explanatory diagram of transfer and upload of an image file and an audio file according to an embodiment of the present technology.
Fig. 2 is a block diagram of an imaging apparatus that performs communication in the embodiment.
Fig. 3 is an explanatory view of IPTC metadata to be added to image data in the embodiment.
Fig. 4 is a block diagram of an information processing apparatus according to the embodiment.
Fig. 5 is an explanatory diagram of a functional configuration of the information processing apparatus according to the embodiment.
Fig. 6 is an explanatory view of an image list screen according to the embodiment.
Fig. 7 is an explanatory view of a caption editing screen according to the embodiment.
Fig. 8 is an explanatory view of an individual image screen according to the embodiment.
Fig. 9 is an explanatory view of an audio reproduction state of the caption editing screen according to the embodiment.
Fig. 10 is an explanatory view of dialog display on the caption editing screen according to the embodiment.
Fig. 11 is an explanatory view of message display on the caption editing screen according to the embodiment.
Fig. 12 is an explanatory view of the caption editing screen in a state where voice memo text is added to caption data in the embodiment.
Fig. 13 is an explanatory view of a horizontal screen state of the caption editing screen according to the embodiment.
Fig. 14 is an explanatory view of a state where a keyboard is displayed on the horizontal screen of the caption editing screen according to the embodiment.
Fig. 15 is an explanatory view of a menu screen according to the embodiment.
Fig. 16 is an explanatory view of a voice memo automatic caption assignment screen according to the embodiment.
Fig. 17 is an explanatory view of a setting screen according to the embodiment.
Fig. 18 is an explanatory view of an automatic upload setting OFF state of an automatic upload setting screen according to the embodiment.
Fig. 19 is an explanatory view of an automatic upload setting ON state of the automatic upload setting screen according to the embodiment.
Fig. 20 is an explanatory view of the automatic upload setting ON state of the automatic upload setting screen according to the embodiment.
Fig. 21 is a flowchart of a processing example at a time of image importing according to the embodiment.
Fig. 22 is a flowchart of a processing example at a time of image importing according to the embodiment.
Fig. 23 is a flowchart of upload file preparation processing according to the embodiment.
Fig. 24 is a flowchart of a processing example from the image list screen according to the embodiment.
Fig. 25 is a flowchart of a processing example from the image list screen according to the embodiment.
Fig. 26 is a flowchart of a processing example from the image list screen according to the embodiment.
Fig. 27 is a flowchart of a processing example at a time of uploading according to the embodiment.

### MODE FOR CARRYING OUT THE INVENTION

Hereinafter, an embodiment will be described in the following order.
<1. Image importing and uploading according to embodiment>
<2. Configuration of imaging apparatus>
<3. Configuration of information processing apparatus>
<4. User interface screen>
<5. Processing example at time of image importing>
<6. Processing example including conversion into text and caption editing>
<7. Processing example at time of uploading>
<8. Conclusion and modification>

### <1. Image importing and uploading according to embodiment>

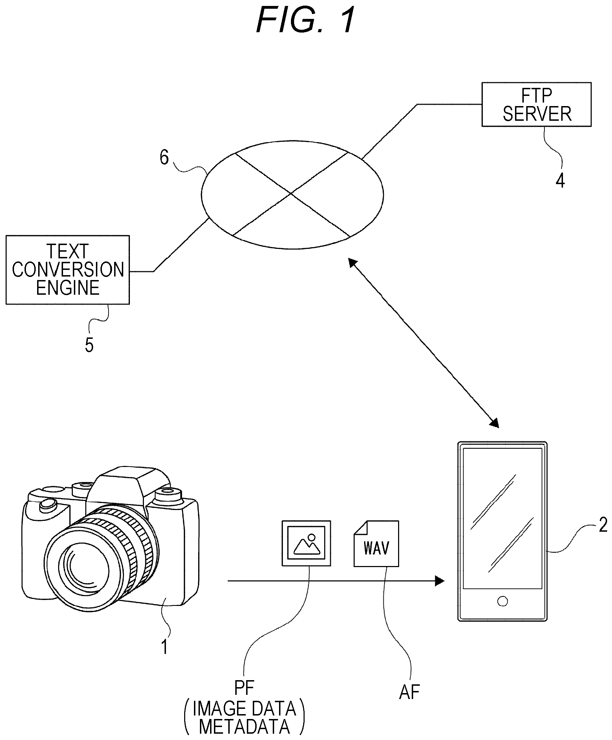

Fig. 1 illustrates an imaging apparatus 1, an information processing apparatus 2, an FTP server 4, a text conversion engine 5, and a network 6.

As the imaging apparatus 1, there are various imaging apparatuses as a video camera and a still camera. The illustrated imaging apparatus 1 is assumed to be a camera used by a camera operator or a reporter in a sports or event venue, a news gathering site, or the like.

Here, as the information processing apparatus 2, a portable terminal device such as a smartphone is exemplified.

Note that, as specific examples of the information processing apparatus, various examples are assumed such as, for example, a personal computer device, a tablet information processing apparatus, a mobile phone device, game equipment, audio equipment, video equipment, a communication device, a television device, and a server device. As long as an apparatus can perform arithmetic operation as information processing, for example, an apparatus incorporating a microcomputer, the apparatus can be implemented as the information processing apparatus of the present disclosure.

However, in a case where use in an event venue or the like is assumed as described above, a portable terminal such as a smartphone or tablet equipment is preferable.

The imaging apparatus 1 and the information processing apparatus 2 can mutually perform information communication by short-range wireless communication such as, for example, Bluetooth (registered trademark), Wi-Fi (registered trademark) communication, or near field communication (NFC), or infrared communication.

Note that the imaging apparatus 1 and the information processing apparatus 2 may be able to communicate with each other by wired connection communication.

Furthermore, the information processing apparatus 2 may function as an FTP server, the imaging apparatus 1 may function as an FTP client, and image data and the like may be uploaded from the imaging apparatus 1 to the information processing apparatus 2.

In a case of the present embodiment, a situation is assumed where an image file PF and an audio file AF are transmitted from the imaging apparatus 1 to the information processing apparatus 2.

The information processing apparatus 2 can hold the image file PF and the audio file AF transferred from the imaging apparatus 1, present to a user, and upload to the FTP server 4.

Note that the imaging apparatus 1 generates image data as a still image or a moving image by an imaging operation, and generates metadata as additional information.

The image file PF illustrated in Fig. 1 is a data file including the image data and the metadata.

In a case of the present embodiment, the imaging apparatus 1 has a voice memo function. This is a function that enables to give an annotation, explanation, or the like to a captured image by voice, by the user inputting voice at a time of imaging. For example, when one still image is captured, by the camera operator uttering to explain image contents while performing a predetermined operation, or uttering in a state where an image is designated, the voice is recorded as a voice memo associated with the image data.

The audio file AF illustrated in Fig. 1 is assumed to be a data file including audio data as the voice memo.

Note that, at a time of capturing a moving image, surrounding sound is also recorded as audio track data, but the audio track data is audio data included in the image file PF and is different from the audio file AF. The audio file AF in the description refers only to a file including audio data as a voice memo.

Hereinafter, an example will be described in which still image capturing is assumed, the image file PF includes still image data and metadata, and the audio file AF includes voice memo data generated in association with the still image capturing.

Note that the audio file AF is not necessarily associated with all the image files PF. Only in a case where the camera operator or the like performs audio input using the voice memo function the audio file AF is generated by the imaging apparatus 1 and associated with the image file PF.

Therefore, at a time of data transfer from the imaging apparatus 1 to the information processing apparatus 2, there are a case where the image file PF and the audio file AF are transmitted in a pair, and a case where only the image file PF is transmitted.

The information processing apparatus 2 can upload the transferred image file PF and audio file AF to the FTP server 4 via the network 6.

As the network 6, for example, the Internet, a home network, a local area network (LAN), a satellite communication network, and various other networks are assumed.

As the FTP server 4, for example, a server operated by a newspaper company, a broadcasting station, a communication company, or the like can be considered. Of course, the FTP server is not limited to such a server.

As a form of the FTP server 4, a cloud server, a home server, a personal computer, or the like is assumed.

The information processing apparatus 2 can upload not only the image file PF or the like as it is from the imaging apparatus 1 to the FTP server 4, but also upload after adding or editing a caption included in metadata, setting an image size, compressing data, or the like.

In particular, in a case of the present embodiment, the image file PF associated with the audio file AF can be uploaded after a process is also performed in which text data obtained by converting audio data in the audio file AF, that is, the above-described voice memo into text is acquired and added to the metadata.

It is conceivable that conversion of the voice memo into text data is executed by equipping the information processing apparatus 2 with a text conversion engine, but the information processing apparatus 2 itself may not have a text conversion function and may use an external text conversion engine 5.

For example, the information processing apparatus 2 transmits the audio data of the voice memo to the text conversion engine 5 via the network 6.

The text conversion engine 5 performs a process of converting the audio data into text, and transmits the generated text data to the information processing apparatus 2. As a result, the information processing apparatus 2 can acquire text data obtained by converting the voice memo into text.

Note that, for the sake of description, the text data obtained by converting the voice memo into text is referred to as "voice memo text".

By constructing the communication system as illustrated in Fig. 1, for example, in a case where the user of the imaging apparatus 1 is a professional camera operator who performs a job of a newspaper company, the following can be performed.

That is, an image captured by the camera operator at an event venue is transferred to an own smartphone (the information processing apparatus 2). Then, a system use mode is assumed where the captured image is uploaded from the information processing apparatus 2 to the FTP server 4 automatically or after necessary work is performed in the information processing apparatus 2 such as a smartphone.

In this case, a voice memo is converted into text, added to metadata, and uploaded together with image data.

### <2. Configuration of imaging apparatus>

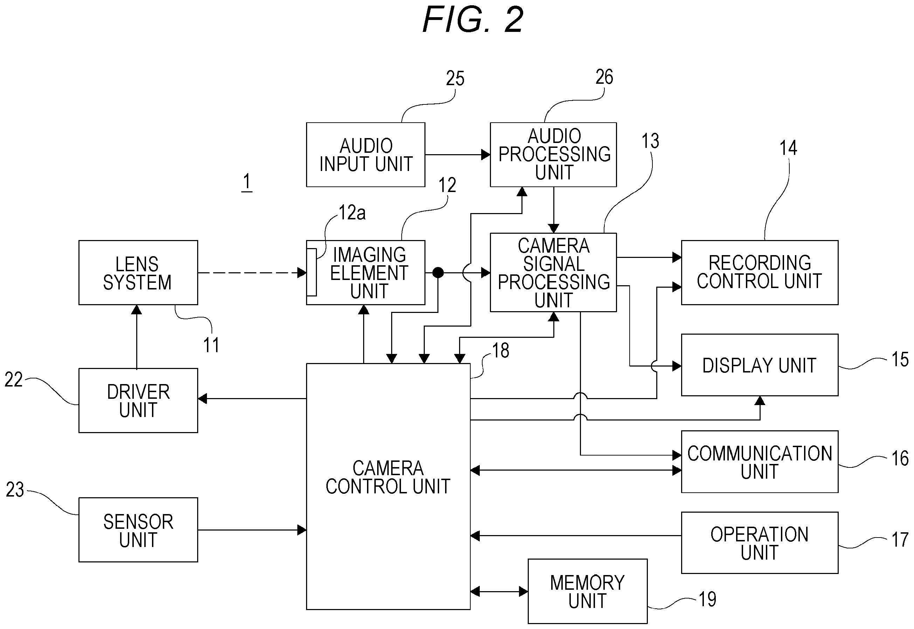

A configuration example of the imaging apparatus 1 will be described with reference to Fig. 2.

The imaging apparatus 1 includes, for example, a lens system 11, an imaging element unit 12, a camera signal processing unit 13, a recording control unit 14, a display unit 15, a communication unit 16, an operation unit 17, a camera control unit 18, a memory unit 19, a driver unit 22, a sensor unit 23, an audio input unit 25, and an audio processing unit 26.

The lens system 11 includes lenses such as a zoom lens and a focus lens, a diaphragm mechanism, and the like. By this lens system 11, light (incident light) from a subject is guided and condensed on the imaging element unit 12.

The imaging element unit 12 includes an image sensor 12a (imaging element) such as, for example, a complementary metal oxide semiconductor (CMOS) or a charge coupled device (CCD).

This imaging element unit 12 performs, for example, correlated double sampling (CDS) processing, automatic gain control (AGC) processing, and the like on an electrical signal obtained by photoelectrically converting light received by the image sensor 12a, and further performs analog/digital (A/D) conversion processing. Then, an imaging signal as digital data is outputted to the camera signal processing unit 13 and the camera control unit 18, in the subsequent stage.

The camera signal processing unit 13 is configured as an image processing processor by, for example, a digital signal processor (DSP) or the like. This camera signal processing unit 13 performs various types of signal processing on a digital signal (a captured image signal) from the imaging element unit 12. For example, as a camera process, the camera signal processing unit 13 performs preprocessing, synchronization processing, YC generation processing, resolution conversion processing, file formation processing, and the like.

In the preprocessing, clamp processing of clamping black levels of R, G, and B to a predetermined level, correction processing between color channels of R, G, and B, and the like are performed on the captured image signal from the imaging element unit 12.

In the synchronization processing, color separation processing is performed so that image data for each pixel has all the R, G, and B color components. For example, in a case of an imaging element using a Bayer array color filter, demosaic processing is performed as the color separation processing.

In the YC generation processing, a luminance (Y) signal and a color (C) signal are generated (separated) from R, G, and B image data.

In the resolution conversion processing, the resolution conversion processing is executed on image data subjected to various types of signal processing.

In the file formation processing, for example, image data subjected to the above-described various types of processing is subjected to, for example, compression encoding for recording or communication, formatting, generation or addition of metadata, and the like to generate a file for recording or communication.

For example, the image file PF in a format such as joint photographic experts group (JPEG), tagged image file format (TIFF), or graphics interchange format (GIF) is generated as a still image file. Furthermore, it is also conceivable to generate the image file PF as an MP4 format or the like used for recording a moving image and audio conforming to MPEG-4.

Note that it is also conceivable to generate the image file PF as RAW image data.

The camera signal processing unit 13 generates metadata to include: information of processing parameters in the camera signal processing unit 13; various control parameters acquired from the camera control unit 18; information indicating an operation state of the lens system 11 and the imaging element unit 12; mode setting information; imaging environment information (date and time, place, and the like); and the like.

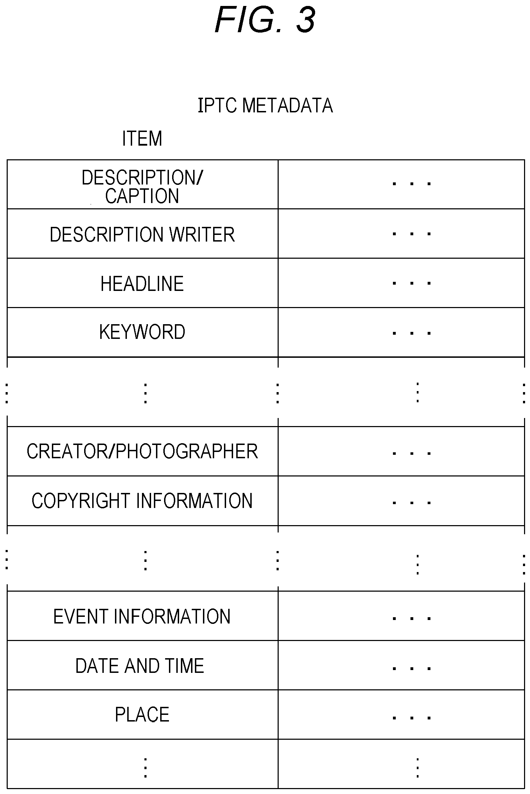

In particular, in a case of the present embodiment, international press telecommunications council (IPTC) metadata illustrated in Fig. 3 is to be included.

The IPTC metadata is metadata in a format established by a media company association. Fig. 3 illustrates only some items of the IPTC metadata, and various types of information such as "description/caption", "description writer", "headline", and "keyword" can be described.

The recording control unit 14 performs recording and reproduction on a recording medium configured by a nonvolatile memory, for example. The recording control unit 14 performs a process of recording image files such as moving image data and still image data, thumbnail images, and the like on the recording medium, for example.

Various actual forms of the recording control unit 14 can be considered. For example, the recording control unit 14 may be configured as a flash memory built in the imaging apparatus 1 and a write/read circuit thereof. Furthermore, the recording control unit 14 may be in a form of a card recording/reproducing unit that performs recording/reproducing access to a recording medium attachable to and detachable from the imaging apparatus 1, for example, a memory card (a portable flash memory or the like). Furthermore, the recording control unit 14 may be implemented as a hard disk drive (HDD) or the like as a form built in the imaging apparatus 1.

The display unit 15 is a display unit that performs various types of displaying for a person who captures an image, and is, for example, a display panel or a viewfinder configured by a display device such as a liquid crystal display (LCD) or an organic electroluminescence (EL) display arranged in a housing of the imaging apparatus 1.

The display unit 15 controls to execute various types of displaying on a display screen, on the basis of an instruction from the camera control unit 18.

For example, the display unit 15 controls to display a reproduced image of image data read from a recording medium in the recording control unit 14.

Furthermore, there is a case where image data of a captured image whose resolution has been converted for display by the camera signal processing unit 13 is supplied to the display unit 15, and the display unit 15 performs display on the basis of the image data of the captured image in response to an instruction from the camera control unit 18. As a result, a so-called through image (a subject monitoring image), which is a captured image during composition confirmation or moving image recording, is displayed.

Furthermore, the display unit 15 controls to execute various operation menus, icons, messages, and the like, that is, display as a graphical user interface (GUI) on a screen on the basis of an instruction from the camera control unit 18.

The communication unit 16 performs data communication and network communication between with external equipment in a wired or wireless manner.

For example, captured image data (a still image file or a moving image file) is transmitted and outputted to an external display device, a recording device, a reproduction device, or the like.

Furthermore, as a network communication unit, the communication unit 16 can perform communication via various networks 6 such as, for example, the Internet, a home network, and a local area network (LAN), and can transmit and receive various data to and from a server, a terminal, and the like on the networks. For example, in a case of the present embodiment, the communication unit 16 performs communication processing of uploading captured image data (the above-described image file and the like) to the FTP server 4.

Furthermore, in a case of the present embodiment, the communication unit 16 communicates with the information processing apparatus 2 and executes transfer of the image file PF and the audio file AF.

The operation unit 17 collectively indicates input devices for the user to perform various operation inputs. Specifically, the operation unit 17 indicates various operation elements (a key, a dial, a touch panel, a touch pad, and the like) provided in the housing of the imaging apparatus 1.

An operation of the user is detected by the operation unit 17, and a signal corresponding to the input operation is transmitted to the camera control unit 18.

The camera control unit 18 includes a microcomputer (arithmetic processing device) including a central processing unit (CPU).

The memory unit 19 stores information and the like to be used for processing by the camera control unit 18. As the illustrated memory unit 19, for example, a read only memory (ROM), a random access memory (RAM), a flash memory, and the like are comprehensively illustrated.

The memory unit 19 may be a memory area built in a microcomputer chip as the camera control unit 18 or may be configured by a separate memory chip.

The camera control unit 18 executes a program stored in the ROM, the flash memory, or the like of the memory unit 19, to control the entire imaging apparatus 1.

For example, the camera control unit 18 controls operations of individual necessary units for: control of a shutter speed of the imaging element unit 12; instructions for various types of signal processing in the camera signal processing unit 13; an imaging operation or a recording operation according to a user's operation; a reproduction operation of a recorded image file; an operation of the lens system 11 such as zooming, focusing, and diaphragm adjustment in a lens barrel; a user interface operation; and the like.

The RAM in the memory unit 19 is used for temporary storage of data, programs, and the like, as a work area at a time of various types of data processing of the CPU of the camera control unit 18.

The ROM and the flash memory (a nonvolatile memory) in the memory unit 19 are used to store an application program for various operations, firmware, various types of setting information, and the like, in addition to an operating system (OS) for the CPU to control each unit and a content file such as an image file.

Examples of the various types of setting information include: the above-described FTP setting information; exposure setting, shutter speed setting, and mode setting as setting information regarding the imaging operation; white balance setting, color setting, and setting related to an image effect as setting information regarding image processing; custom key setting and display setting as setting information regarding operability; and the like.

The driver unit 22 is provided with, for example, a motor driver for a zoom lens drive motor, a motor driver for a focus lens drive motor, a motor driver for a motor of a diaphragm mechanism, and the like.

These motor drivers apply a drive current to a corresponding driver in response to an instruction from the camera control unit 18, and control to execute movement of a focus lens and a zoom lens, opening and closing of a diaphragm blade of the diaphragm mechanism, and the like.

The sensor unit 23 comprehensively indicates various sensors mounted on the imaging apparatus.

For example, an inertial measurement unit (IMU) is mounted as the sensor unit 23. The sensor unit 23 can detect an angular velocity with an angular velocity (gyro) sensor of three axes of pitch, yaw, and roll, for example, and can detect an acceleration with an acceleration sensor.

Furthermore, as the sensor unit 23, for example, a position information sensor, an illuminance sensor, or the like may be mounted.

The audio input unit 25 includes, for example, a microphone, a microphone amplifier, and the like, and outputs an audio signal obtained by collecting ambient sound.

The audio processing unit 26 performs a process of converting an audio signal obtained by the audio input unit 25 into a digital audio signal, AGC processing, sound quality processing, noise reduction processing, and the like. Audio data subjected to these kinds of processing is outputted to the camera signal processing unit 13 and the camera control unit 18.

For example, the audio data is processed as audio data accompanying a moving image in the camera control unit 18 at a time of capturing the moving image.

Furthermore, the audio data can be converted into a file as the audio file AF in the camera signal processing unit 13 or the camera control unit 18, as audio data as a so-called voice memo at a time of image capturing or the like.

The audio file AF can be recorded on a recording medium in association with an image file in the recording control unit 14, or can be transmitted and outputted together with the image file from the communication unit 16.

### <3. Configuration of information processing apparatus>

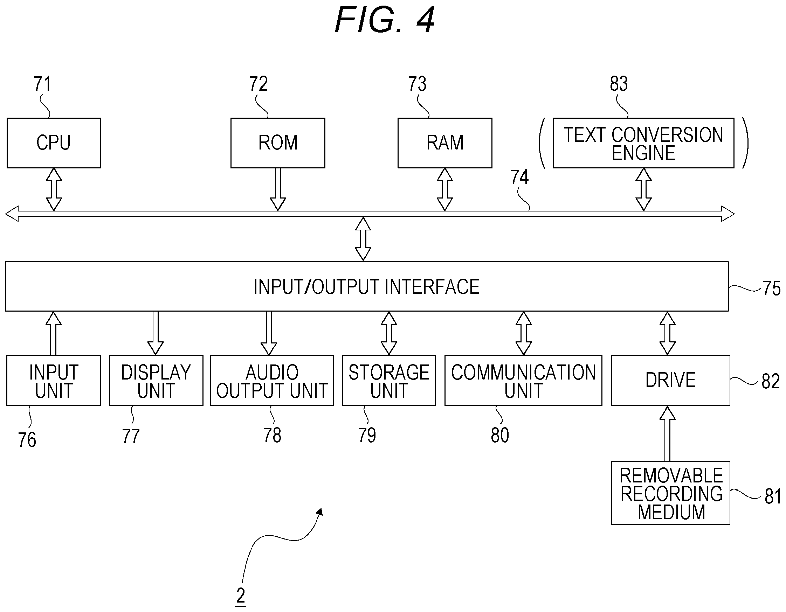

Fig. 4 illustrates a configuration example of the information processing apparatus 2 such as a portable terminal device.

A CPU 71 of the information processing apparatus 2 executes various types of processing in accordance with a program stored in a ROM 72 or a program loaded from a storage unit 79 into a RAM 73. The RAM 73 also appropriately stores data and the like necessary for the CPU 71 to execute various types of processing, for example.

The CPU 71, the ROM 72, and the RAM 73 are mutually connected via a bus 74. This bus 74 is further connected with an input/output interface 75.

To the input/output interface 75, an input unit 76 including an operation element and an operation device is connected.

For example, as the input unit 76, various operation elements and operation devices are assumed, such as a keyboard, a mouse, a key, a dial, a touch panel, a touch pad, and a remote controller.

An operation of the user is detected by the input unit 76, and a signal corresponding to the input operation is interpreted by the CPU 71.

Furthermore, to the input/output interface 75, a display unit 77 including an LCD, an organic EL panel, or the like, and an audio output unit 78 including a speaker or the like are connected integrally or separately.

The display unit 77 is a display unit that performs various types of displaying, and configured by, for example, a display device provided in a housing of the information processing apparatus 2, a separate display device connected to the information processing apparatus 2, or the like.

The display unit 77 displays an image for various types of image processing, a moving image as a processing target, and the like on a display screen on the basis of an instruction from the CPU 71. Furthermore, the display unit 77 displays various operation menus, icons, messages, and the like, that is, displays as a graphical user interface (GUI) on the basis of an instruction from the CPU 71.

The input/output interface 75 is connected with the storage unit 79 including a hard disk, a solid state memory, or the like, and a communication unit 80 including a modem or the like.

The communication unit 80 performs communication processing via a transmission path such as the Internet, wired/wireless communication with various types of equipment, bus communication, and the like.

In a case of the present embodiment, the communication unit 80 has a function of performing communication between with the imaging apparatus 1 by, for example, the above-described FTP communication, short-range wireless communication such as Bluetooth, Wi-Fi, or NFC, infrared communication, wired connection communication, or the like.

To the input/output interface 75, a drive 82 is also connected as required, and a removable recording medium 81 such as a magnetic disc, an optical disc, a magneto-optical disc, or a semiconductor memory is mounted as appropriate.

By the drive 82, a data file such as an image file, various computer programs, and the like can be read from the removable recording medium 81. The read data file is stored in the storage unit 79, and an image and sound included in the data file are outputted by the display unit 77 and the audio output unit 78. Furthermore, the computer program and the like read from the removable recording medium 81 are installed in the storage unit 79 as necessary.

The information processing apparatus 2 may be equipped with a processor as a text conversion engine 83.

The text conversion engine 83 performs, for example, a process of analyzing audio data and converting the audio data into text data.

Note that, in a case where the external text conversion engine 5 is used as described above, the information processing apparatus 2 may not include the processor that functions as the text conversion engine 83.

In the information processing apparatus 2, for example, software for processing of the present disclosure can be installed via network communication by the communication unit 80 or via the removable recording medium 81. Alternatively, the software may be stored in advance in the ROM 72, the storage unit 79, or the like.

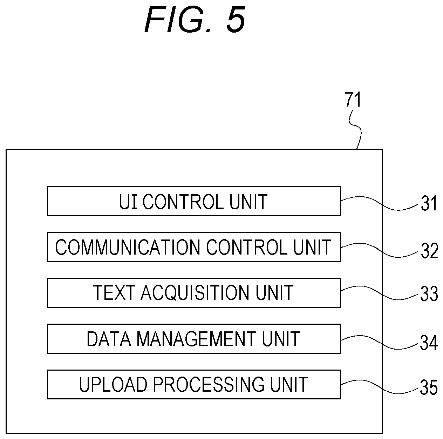

A functional configuration as illustrated in Fig. 5 is constructed in the CPU 71 of the information processing apparatus 2 by such software (an application program), for example.

Fig. 5 illustrates a user interface (UI) control unit 31, a communication control unit 32, a text acquisition unit 33, a data management unit 34, and an upload processing unit 35 as functions provided in the information processing apparatus 2.

The UI control unit 31 presents, to the user, the image file PF and the audio file AF transferred from the imaging apparatus 1, and performs UI processing of receiving a user operation for setting, editing, and the like of various types of information.

Examples of the UI processing include a process of providing an operation input environment to the user by performing output such as display output and voice output to the user; a process of performing display output and sound output for presenting various types of information to the user; a process of detecting an operation by the user; a process of detecting/estimating an intention of the user; and the like.

The UI control unit 31 performs the process of providing an operation input environment to the user by performing output such as display output and voice output to the user, for example.

Alternatively, the UI control unit 31 performs the process of detecting an operation by the user, for example.

Alternatively, the UI control unit 31 performs, for example, both a process of providing the operation input environment to the user and the process of detecting an operation by the user.

Of course, the UI control unit 31 may perform other UI processing.

In a case of the present embodiment, the UI control unit 31 provides a UI environment that allows turning ON/OFF of a process of automatically adding voice memo text obtained by converting a voice memo of the audio file AF into text, as a part of caption data in metadata added to image data.

Furthermore, after performing a process of setting voice memo text as metadata corresponding to image data, the UI control unit 31 provides a UI environment that allows to set whether or not to automatically perform a process of uploading the image file PF including image data and metadata to the FTP server 4. Furthermore, in this case, it is also possible to set whether or not to upload the audio file AF.

Furthermore, the UI control unit 31 provides a UI environment for voice memo text display and audio reproduction.

The communication control unit 32 is a function of controlling a communication operation by the communication unit 80.

This communication control unit 32 performs a process of causing the communication unit 80 to communicate with the imaging apparatus 1.

In a case where the audio file AF is transferred from the imaging apparatus 1, the text acquisition unit 33 performs a process of acquiring voice memo text obtained by converting a voice memo included in the audio file AF into text.

Specifically, the text acquisition unit 33 causes the text conversion engine 83 to execute text conversion processing to acquire voice memo text.

Alternatively, the text acquisition unit 33 performs a process of transmitting audio data as a voice memo from the communication unit 80 to the text conversion engine 5 and acquiring voice memo text returned from the text conversion engine 5.

The data management unit 34 is a function of performing a process of receiving the image file PF including image data and the audio file AF including a related voice memo, which are transmitted from the imaging apparatus 1, and then setting voice memo text acquired by the text acquisition unit 33 for the voice memo included in the audio file AF as metadata corresponding to the image data.

Furthermore, the data management unit 34 performs processing such as storage and editing of the image file PF and the audio file AF that are transmitted from the imaging apparatus 1. For example, image data editing, metadata addition (tag addition), and various types of operation setting are performed.

The upload processing unit 35 is a function of performing upload processing to the FTP server 4 via the communication unit 80.

In particular, the upload processing unit 35 performs the process of uploading the image file PF (image data and metadata) to the FTP server 4, after the data management unit 34 performs the process of setting voice memo text of the audio file AF as the metadata corresponding to the image data. There is also a case where the upload processing unit 35 uploads the audio file AF to the FTP server 4 together with the image file PF.

Each of the above functions is provided, for example, when the information processing apparatus 2 installs application software for implementing the processing of the present disclosure.

By including at least the text acquisition unit 33 and the data management unit 34 among the above-described functions, the information processing apparatus 2 becomes equipment that executes a process of converting transferred audio data into text and setting as metadata of image data.

### <4. User interface screen>

Hereinafter, an UI screen on the display unit 77 of the information processing apparatus 2 will be described. Each of the following screens is an example of a screen displayed on the display unit 77 by the function of the UI control unit 31 with the CPU 71. In the description, for example, a smartphone is assumed as the information processing apparatus 2, and display contents on a display formed on the housing thereof are assumed.

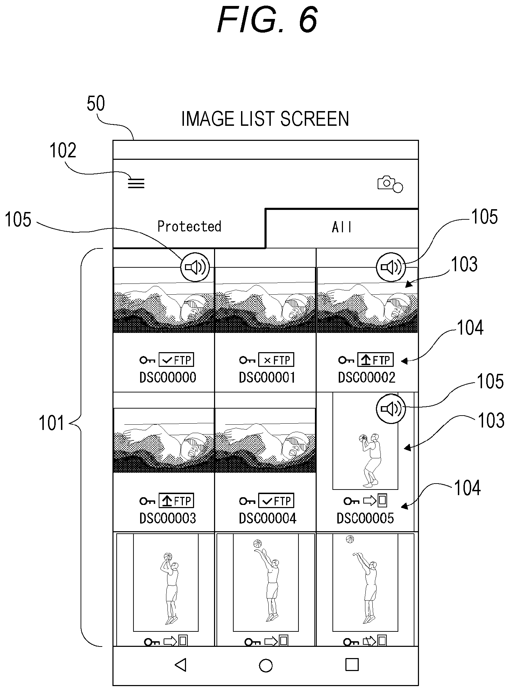

Fig. 6 illustrates an image list screen 50.

This image list screen 50 is a screen on which image data of the image file PF transferred from the imaging apparatus 1 is displayed as a list with thumbnail images.

An image list area 101 is provided on the image list screen 50, and a list of thumbnail images 103 of image data imported from the imaging apparatus 1 is displayed in the image list area 101. Note that, for target images to be displayed in the list, selection can be made for all the imported images, only protected images, or the like. In a case where the number of images is large and the images cannot be displayed on one screen, individual images (the thumbnail images 103) are displayed by scrolling, page feeding, or the like.

In correspondence with each thumbnail image 103, image information 104 is displayed. As the image information 104, for example, an image data name such as "DSC00000", an icon indicating a protection state, an icon related to FTP upload, and the like are displayed.

Furthermore, some image data (the image files PF) displayed in the list are associated with the audio file AF as a voice memo. For image data having a corresponding voice memo, a voice memo mark 105 is displayed on the thumbnail image 103.

On the image list screen 50, a menu button 102 is displayed. When the user performs an operation such as tapping the menu button 102, the display transitions to a menu screen 55 to be described later.

The user can perform an image selection operation on the image list screen 50. For example, the user can select specific image data by an operation such as tapping the thumbnail image 103.

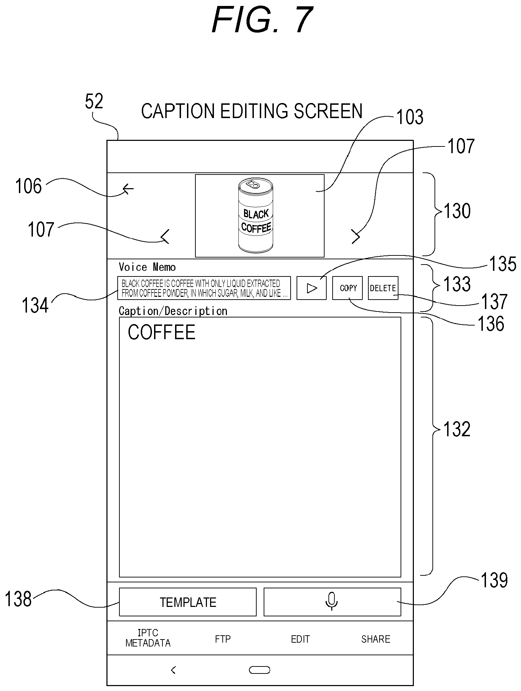

For example, a caption editing screen 52 as illustrated in Fig. 7 is displayed by the selection operation of specific image data.

The caption editing screen 52 is provided with an image field 130, a caption field 132, and a voice memo field 133.

In the image field 130, the thumbnail image 103 and a feed button 107 are displayed. The displayed thumbnail image 103 is a thumbnail image of image data selected by the user. This configuration clarifies that the displayed caption editing screen 52 is a screen for editing a caption for image data represented by the thumbnail image 103.

By operating the feed button 107, the user can switch to a selected state of image data arranged before and after in the image list screen 50. For example, by operating the feed button 107, the thumbnail image 103 is switched on the caption editing screen 52. Then, the caption editing screen 52 becomes a screen for performing caption editing for image data represented by the new thumbnail image 103.

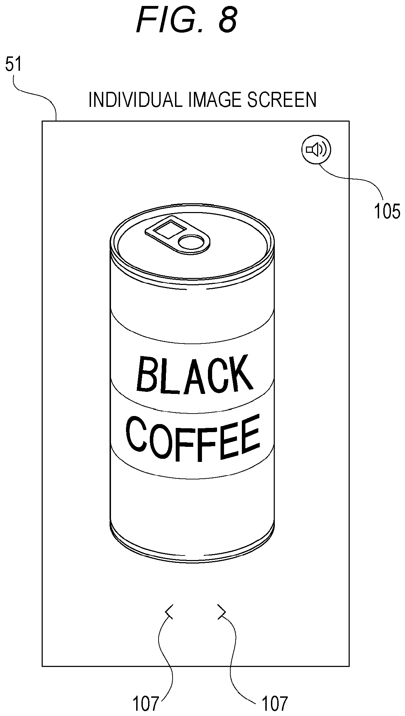

Furthermore, the user can display the image indicated by the thumbnail image 103 larger on an individual image screen 51 of Fig. 8 by, for example, a pinch operation or a tap operation.

On the individual image screen 51, a feed button 107 is displayed. By operating the feed button 107, the user can switch the display to previous and subsequent images in a state of the individual image screen 51.

In a case of image data having a voice memo, the voice memo mark 105 is also displayed on the individual image screen 51.

In the caption field 132 of the caption editing screen 52 of Fig. 7, caption data described in the field of "description/caption" in the IPTC metadata described above can be inputted.

For example, when the user taps the caption field 132, a keyboard (not illustrated) is displayed, and characters can be inputted using the keyboard. The figure illustrates a state where characters "coffee" have been inputted. The caption data inputted using the caption field 132 is to be described in the description/caption field of the IPTC metadata for the image data.

Note that, in a case where the caption editing screen 52 is opened for image data to which caption data has already been inputted, that is, image data in which caption data has already been described as the IPTC metadata, the inputted caption data is displayed in the caption field 132. Since the caption data can also be added by the imaging apparatus 1, for example, the caption data inputted by the imaging apparatus 1 may be displayed in the caption field 132, or the caption data inputted in the caption field 132 in the past and described in the IPTC metadata may be displayed.

Therefore, by using the caption field 132, the user can newly input caption data, or perform edition such as addition, deletion, or correction on caption data inputted in the past.

The caption editing screen 52 is provided with a template button 138 and a voice input button 139.

The user can call and display a caption template in the caption field 132 by operating the template button 138.

Furthermore, the user can input caption data by voice by operating the voice input button 139. In this case, the inputted voice may be converted into text similarly to the conversion of a voice memo into text.

In the voice memo field 133 of the caption editing screen 52, a voice memo text area 134 is provided and voice memo text is displayed. That is, a voice memo transferred as audio data from the imaging apparatus 1 is converted into text and displayed in the voice memo field 133. As a result, the user can confirm contents of the voice memo on the caption editing screen 52.

Furthermore, in the voice memo field 133, a reproduction button 135, a copy button 136, and a delete button 137 are displayed, and an operation related to a voice memo can be made.

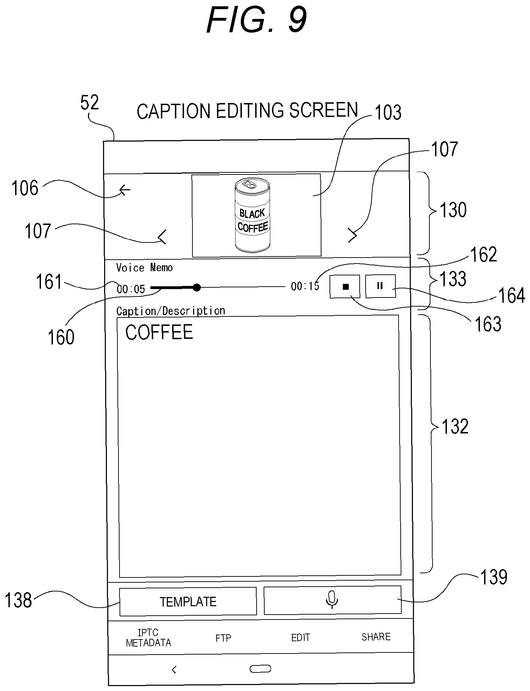

When the user operates the reproduction button 135, audio reproduction of the voice memo is started. Fig. 9 illustrates display of a state where audio reproduction is being performed.

For example, during the audio reproduction, a seek bar 160, a current time 161, a total reproduction length 162, a stop button 163, and a pause button 164 are displayed instead of displaying the voice memo text area 134, the reproduction button 135, the copy button 136, and the delete button 137. The seek bar 160 and the current time 161 indicate progress of the audio reproduction.

Furthermore, the stop button 163 and the pause button 164 enable the user to stop or pause the audio reproduction.

When the user operates the delete button 137 in the voice memo field 133 on the caption editing screen 52 of Fig. 7, the voice memo is deleted.

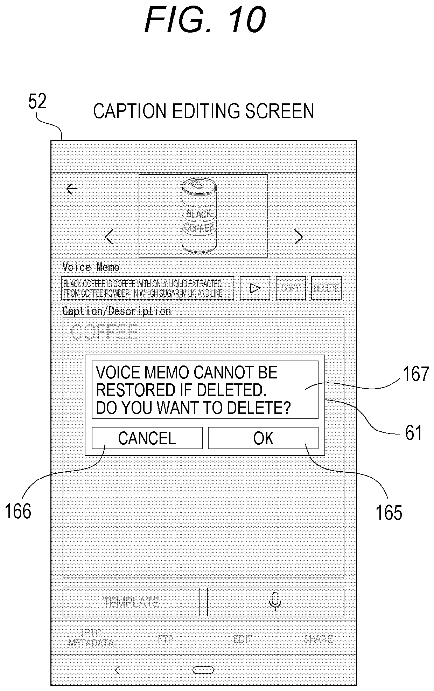

In this case, in response to the operation on the delete button 137, a confirmation dialog 61 is displayed as illustrated in Fig. 10, for example, and the user is requested to confirm deletion. In the confirmation dialog 61, a call attention message 167 related to deletion is displayed, and an OK button 165 and a cancel button 166 are displayed. When the user operates the OK button 165, deletion processing is executed. In a case where the user operates the cancel button 166, the deletion processing is canceled.

Note that the following example can be considered as deletion of the voice memo.

In a case where there is a voice memo corresponding to image data, voice memo text may have been obtained or the voice memo may not have been converted into text.

In a case where there is a voice memo that is audio data and there is no voice memo text, it is conceivable that the voice memo (the audio file AF) is to be deleted by a deletion operation.

In a case where there are a voice memo that is audio data and voice memo text, cases are individually conceivable where both the voice memo and the voice memo text are to be deleted, where only the voice memo is to be deleted, or where only the voice memo text is to be deleted, by the deletion operation. Of course, the delete button may be individually provided for the voice memo and the voice memo text.

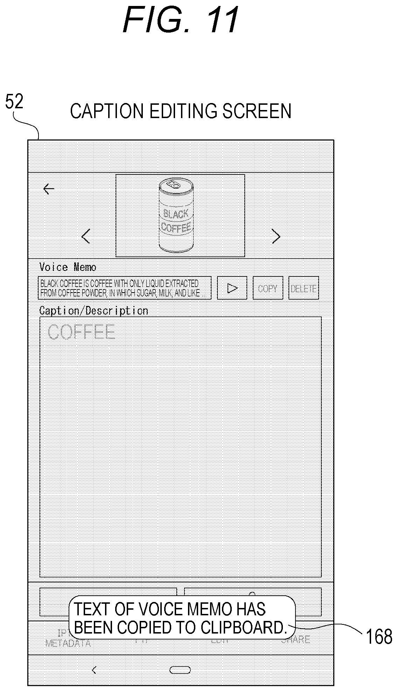

When the user operates the copy button 136 in the voice memo field 133 of the caption editing screen 52 of Fig. 7, the voice memo text displayed in the voice memo text area 134 is copied to a clipboard area on the system. In this case, for example, a copy message 168 as illustrated in Fig. 11 is displayed to notify the user of the copy.

The user can paste text data of the voice memo text copied to the clipboard area into the caption field 132 by a predetermined operation. That is, the user can use the voice memo text as caption data by the copy and paste operation.

Furthermore, the voice memo text may be automatically inserted into the caption field 132 by setting of automatic caption assignment described later.

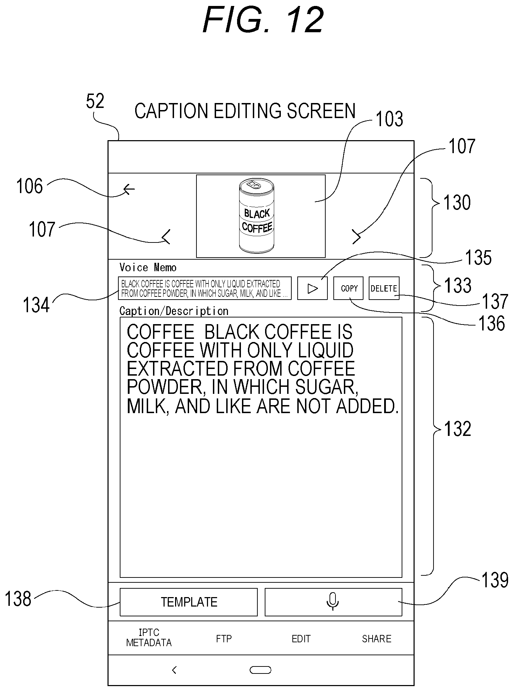

For example, Fig. 12 illustrates an example in which text data as voice memo text is added as caption data in a state where the caption editing screen 52 is opened. In this case, the text "coffee" has been previously inputted as the caption data, and the following text data "Black coffee is coffee ... milk or the like is not added" is voice memo text that has been automatically inserted.

Note that, in a case where the voice memo text is automatically inserted into the caption data as described above, in a case where text of the caption data exists first, it is conceivable to insert the voice memo text before or after the caption. In a case of the automatic insertion, it is desirable to add the voice memo text after the already inputted caption, in order to facilitate understanding of contents of the already inputted caption.

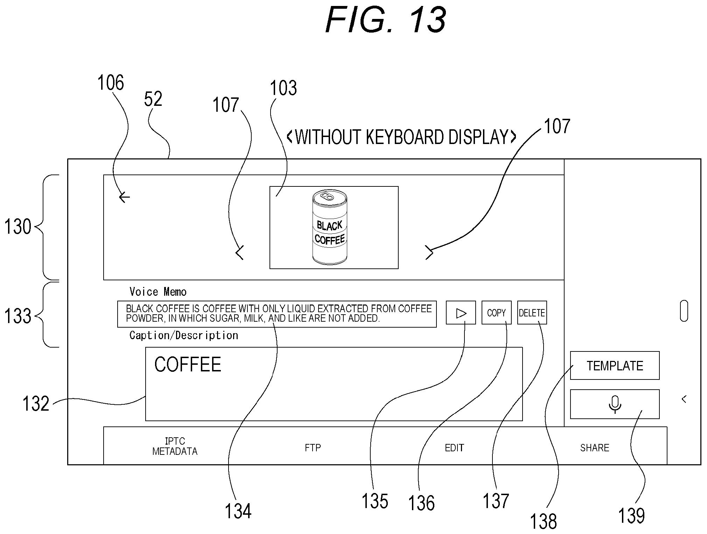

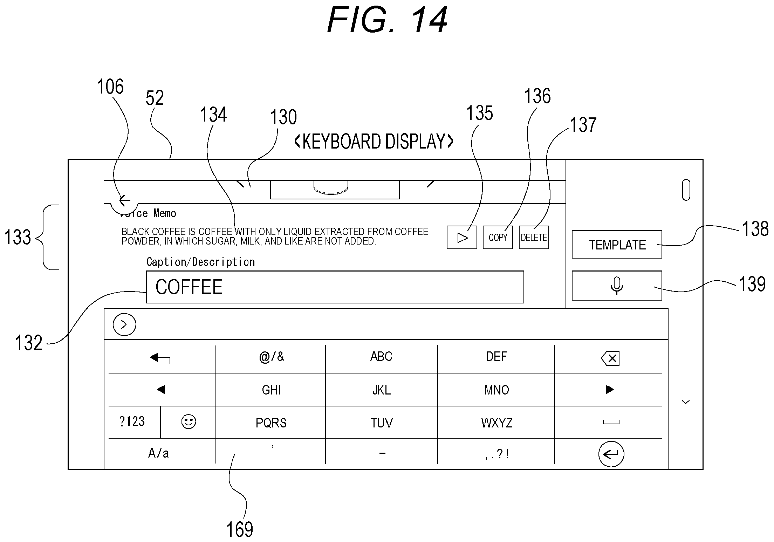

Note that Figs. 13 and 14 illustrate display examples in a case where the information processing apparatus 2, which is a smartphone, is used while turned sideways. Display contents of Fig. 13 are similar to those of Fig. 7, but a region arrangement corresponds to a horizontal screen.

Furthermore, Fig. 14 illustrates a state where a keyboard 169 to input characters to the caption field 132 is displayed. In this case, the image field 130, the voice memo field 133, and the caption field 132 are entirely shifted upward, and the caption field 132 is in a visible state even when the keyboard 169 is displayed.

Note that, as illustrated in Figs. 7, 9, 12, 13, and 14, a return button 106 is provided on the caption editing screen 52. When the return button 106 is operated, for example, the screen returns to the image list screen 50.

Next, an interface screen for setting related to processing and uploading of a voice memo will be described.

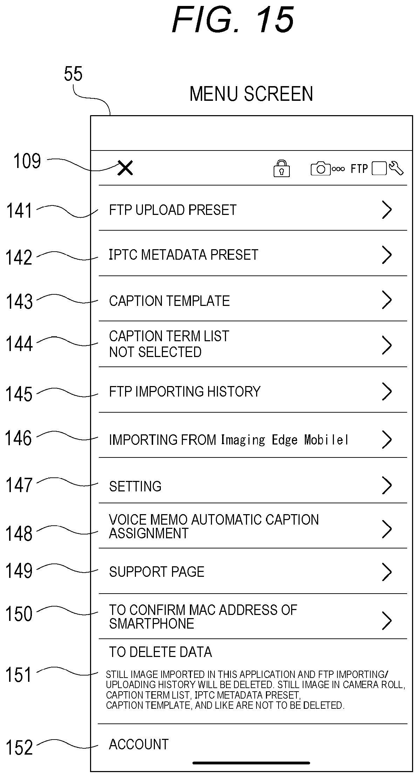

For example, when the menu button 102 on the image list screen 50 of Fig. 6 is operated, the menu screen 55 of Fig. 15 is displayed.

The menu screen 55 is provided with a close button 109 to close the menu screen 55.

The menu screen 55 is provided with, as menu items, an FTP upload preset item 141, an IPTC metadata preset item 142, a caption template item 143, a caption term list item 144, an FTP importing history item 145, an importing item 146, a setting item 147, a voice memo automatic caption assignment item 148, a support page item 149, a MAC address confirmation item 150, a data deletion item 151, and an account item 152. Of course, these are merely examples, and various examples of the contents of the menu item can be considered. Furthermore, the number of items may be further increased, and items may be hierarchized. In a case where the number of items is large, individual items are displayed by scrolling or page feeding.

Here, operations from the setting item 147 and the voice memo automatic caption assignment item 148 will be described as items related to processing of the present embodiment.

The voice memo automatic caption assignment item 148 is an item that allows the user to select whether or not to automatically add voice memo text to caption data in a case where the voice memo is converted into text.

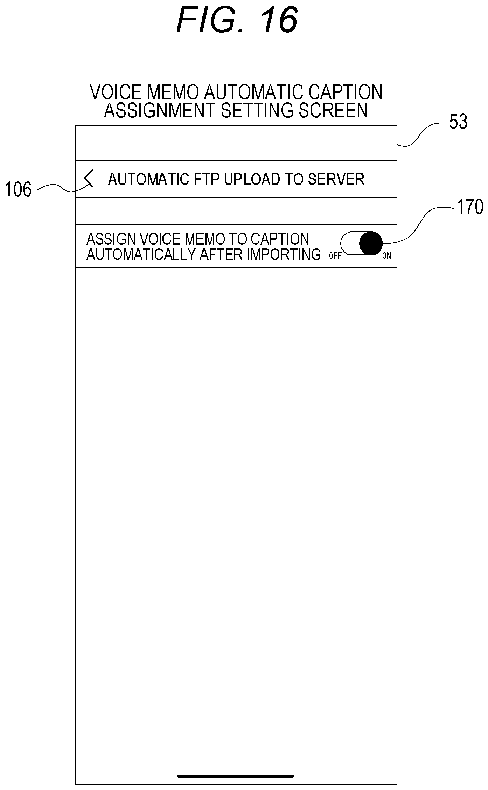

When the user operates the voice memo automatic caption assignment item 148, a voice memo automatic caption assignment setting screen 53 of Fig. 16 is displayed. On the voice memo automatic caption assignment setting screen 53, a setting switch 170 is displayed, so that the user can set ON/OFF of a voice memo automatic caption assignment function.

In a case where the setting switch 170 is turned ON, voice memo text is automatically inserted into caption data as illustrated in Fig. 12 in a case where the voice memo text is obtained.

When the setting switch 170 is turned OFF, such automatic insertion is not to be performed.

The voice memo automatic caption assignment setting screen 53 is provided with the return button 106. When the return button 106 is operated, the screen returns to the menu screen 55 of Fig. 15. The ON/OFF state of the setting button 170 takes effect in a state when the return button 106 is operated.

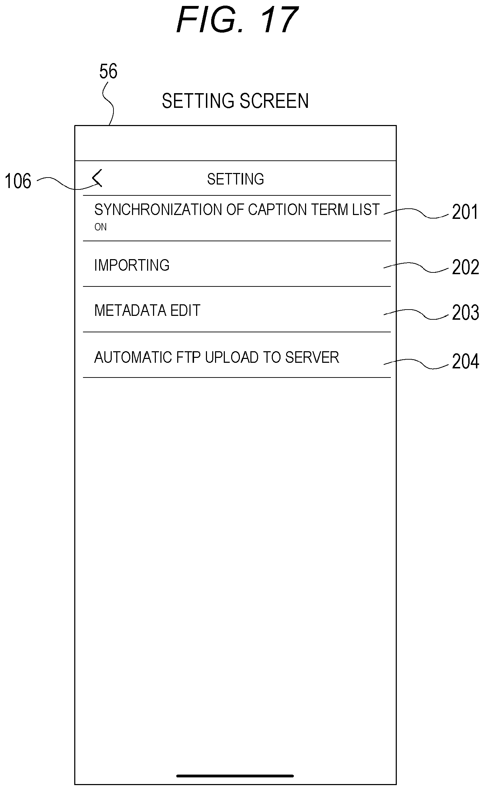

Furthermore, in the menu screen 55 of Fig. 15, a setting screen 56 of Fig. 17 is displayed when the user operates the setting item 147. On the setting screen 56, as setting items, a caption term list synchronization item 201, an importing item 202, a metadata edit item 203, and an automatic FTP upload item 204 are displayed. Of course, this is an example.

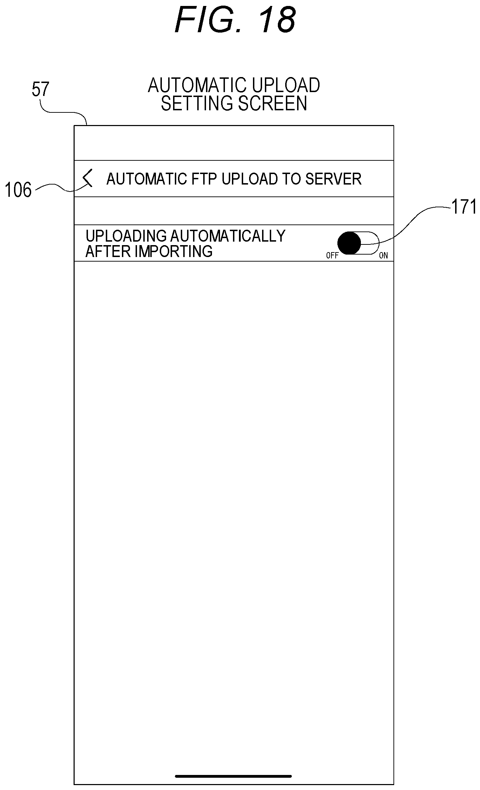

When the user operates the automatic FTP upload item 204 on the setting screen 56, an automatic upload setting screen 57 of Fig. 18 is displayed.

On the automatic upload setting screen 57, a setting switch 171 is displayed, so that the user can set ON/OFF of automatic upload.

An automatic upload function is a function of automatically uploading the image file PF to the set FTP server 4 when the image file PF is transferred from the imaging apparatus 1.

Fig. 18 illustrates a case where the setting switch 171 is in an OFF state.

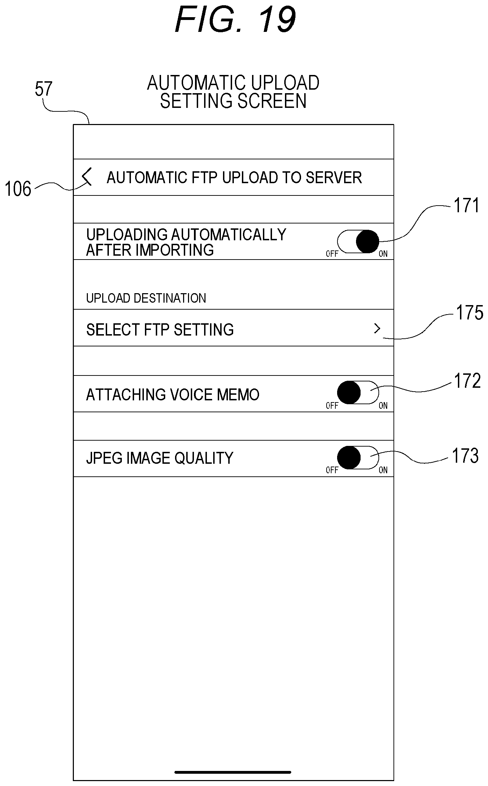

When the user turns ON the setting switch 171, display for automatic upload setting is performed as illustrated in Fig. 19. That is, an upload destination display field 175 is displayed, and a setting switch 172 related to voice memo attachment and a setting switch 173 related to JPEG image quality are displayed.

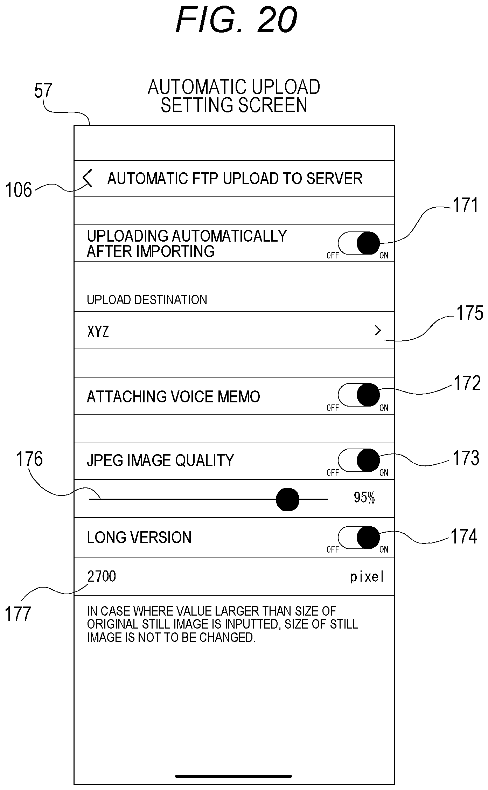

In Fig. 19, the upload destination display field 175 indicates that an upload destination has not yet been designated. When the user performs an operation to designate the upload destination, the upload destination is displayed with, for example, a name "XYZ" given by the user at a time of FTP setting as illustrated in Fig. 20.

The setting switch 172 related to voice memo attachment allows the user to set whether or not to upload the audio file AF as a voice memo together with the image file PF at a time of the automatic upload. For example, when the setting switch 172 is turned ON as illustrated in Fig. 20, the audio file AF is also set as an upload target when automatic upload processing is performed.

The setting switch 173 related to JPEG image quality allows the user to set a compression ratio and an image size of image data to be uploaded.

When the setting switch 173 is turned ON, a compression rate setting bar 176, a long-side pixel setting part 177, and a setting switch 174 are displayed as illustrated in Fig. 20.

The user can operate the compression rate setting bar 176 to designate the compression rate. Furthermore, the number of pixels on the long side can be set by the setting switch 174.

The user operation described above on the automatic upload setting screen 57 takes effect by operating the return button 106 to return to the setting screen 56 of Fig. 17.

When the return button 106 is operated on the setting screen 56, the screen returns to the menu screen of Fig. 15.

### <5. Processing example at time of image importing>

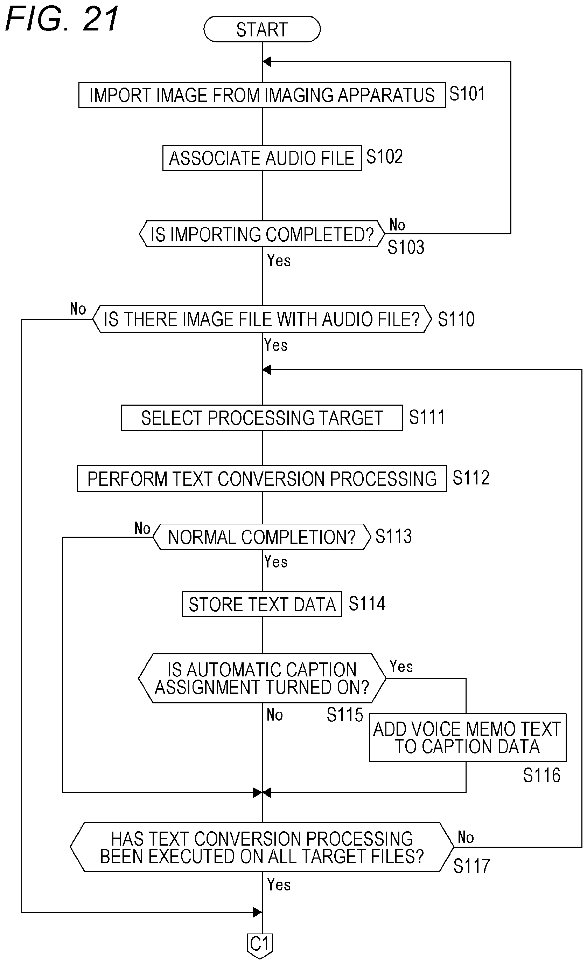

As a processing example of the information processing apparatus 2 with the screen display described above, first, a processing example at a time of importing the image file PF from the imaging apparatus 1 will be described with reference to Figs. 21, 22, and 23.

Note that each processing example described below is processing executed by functions described in Fig. 5 implemented by application software in the CPU 71.

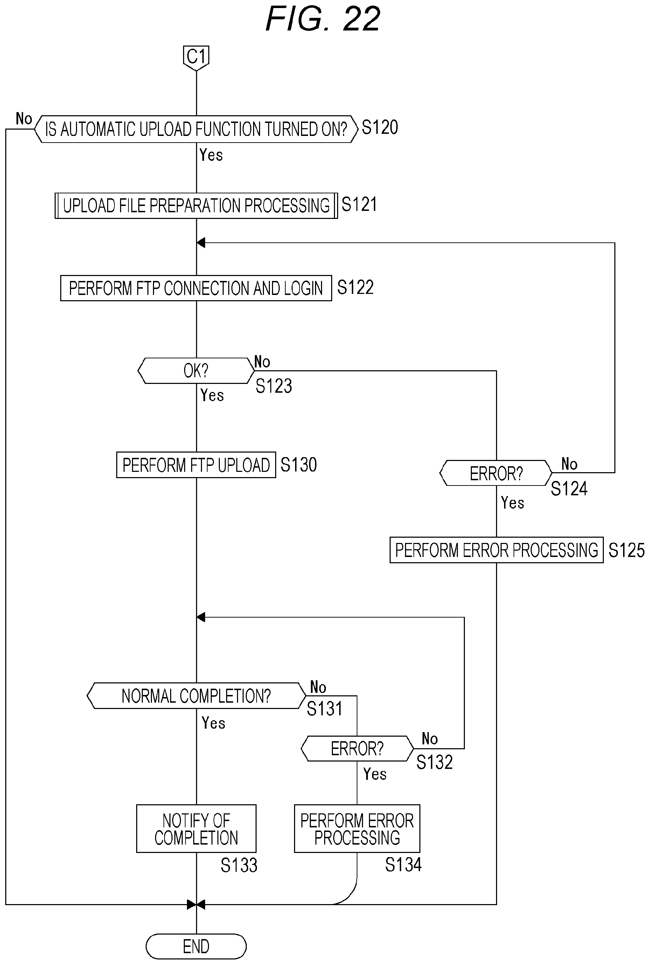

Figs. 21 and 22 illustrate a series of flowcharts separately, and "c1" indicates a connection relationship.

In step S101 in Fig. 21, the CPU 71 performs importing processing of the image file PF from the imaging apparatus 1.

The importing processing of the image file PF from the imaging apparatus 1 is performed by, for example, communication between the information processing apparatus 2 and the imaging apparatus 1. For example, when the user performs a predetermined operation on the information processing apparatus 2 side or the imaging apparatus 1 side, transfer of the image file PF is started.

The imaging apparatus 1 performs a process of transferring the image file PF selected as a file to be transferred, to the information processing apparatus 2 by FTP communication. Furthermore, in this case, in a case where there is an audio file AF including a voice memo associated with the image file PF, the audio file AF is also transferred to the information processing apparatus 2.

On the information processing apparatus 2 side, the CPU 71 is to perform the importing processing of the image file PF and the audio file AF sequentially transferred, as the process of step S101.

Here, between the imaging apparatus 1 and the information processing apparatus 2, a rule is determined in advance in which, in a case where there is an audio file AF associated with the image file PF, the audio file AF is transmitted first and then the image file PF is transmitted.

As a result, in a case where one audio file AF is received, the CPU 71 can determine that the audio file AF has been associated with the image file PF to be received next. In step S102, in accordance with such a rule, the CPU 71 performs a process of managing the received audio file AF in association with the received image file PF.

Note that, in addition to this, for example, it is also conceivable that metadata of the image file PF includes information specifying the associated audio file AF. In step S102, the process of managing the received audio file AF in association with the received image file PF may be performed with reference to the metadata.

When the importing of one or more image files PF is completed, the CPU 71 proceeds from step S103 to step S110, and determines whether or not there is an image file PF with which the audio file AF is associated, among the imported image files PF.

In a case where all the imported files are only the image file PF and there is no audio file AF, the CPU 71 proceeds from step S110 to step S120 in Fig. 22.

Whereas, in a case where there is at least one image file PF associated with the audio file AF, the CPU 71 proceeds from step S110 to step S111 in Fig. 21.

In step S111, the CPU 71 selects, as a processing target, one of the one or more image files PF associated with the audio file AF among the image files PF imported this time.

Then, in step S112, the CPU 71 performs the text conversion processing on a voice memo of the audio file AF associated with the image file PF set as a processing target. For example, audio data as the voice memo is transmitted to the text conversion engine 5, and data converted into text is received. Alternatively, in a case where the text conversion engine 83 is mounted in the information processing apparatus 2, the text conversion processing may be performed by the text conversion engine 83.

In a case where the conversion into text is normally performed and voice memo text has been successfully acquired, the CPU 71 proceeds from step S113 to step S114, and performs a process of storing the voice memo text into the storage unit 79, for example, as the voice memo text corresponding to the image file PF as a processing target.

In step S115, the CPU 71 checks whether or not the automatic caption assignment function is turned ON. That is, it is a function that enables the user to freely set ON/OFF on the voice memo automatic caption assignment setting screen 53 of Fig. 16.

When the automatic caption assignment function is not ON, the CPU 71 proceeds to step S117.

When the automatic caption assignment function is ON, the CPU 71 proceeds to step S116 and performs a process of inserting voice memo text into caption data. That is, a process of writing the voice memo text into the description/caption field in the IPTC metadata is performed. As described above, in a case where caption data has already been written in the description/caption field, the CPU 71 is to write the voice memo text thereafter.

After performing such automatic caption assignment processing, the CPU 71 proceeds to step S117.

In a case where the conversion into text in step S112 has not been performed normally, for example, a case where acquisition of voice memo text has failed due to a processing error, a communication error, or the like, the CPU 71 proceeds from step S113 to step S117. In this case, prolongation of processing at the time of transfer is avoided by not performing retry of the text conversion processing in particular. This is because there is another opportunity for conversion into text as described later. However, as a matter of course, the text conversion processing may be retried a predetermined number of times.

In a case where the text conversion processing, the voice memo automatic caption assignment processing, and the like described above are performed on a certain image file PF and the process proceeds to step S117, or in a case where the conversion into text is not normally completed and the process proceeds to step S117, the CPU 71 checks whether or not other image file PF to be subjected to similar processing remains, returns to step S111 if there is any other image file PF, and performs similar processing as described above with one of the image files PF as a processing target.

By executing the text conversion processing in step S112 at least once for all the image files PF associated with the audio file AF, it is determined in step S117 that conversion into text has been completed for all the image files PF, and the process proceeds to step S120 in Fig. 22.

In step S120, the CPU 71 checks whether or not the automatic upload function is turned ON. That is, it is a function that enables the user to freely set ON/OFF on the automatic upload setting screen 57 illustrated in Figs. 18, 19, and 20.

When the automatic upload function is not ON, the CPU 71 ends a series of processing at a time of image importing from step S120.

When the automatic upload function is ON, the CPU 71 proceeds from step S120 to step S121, and performs upload file preparation processing.

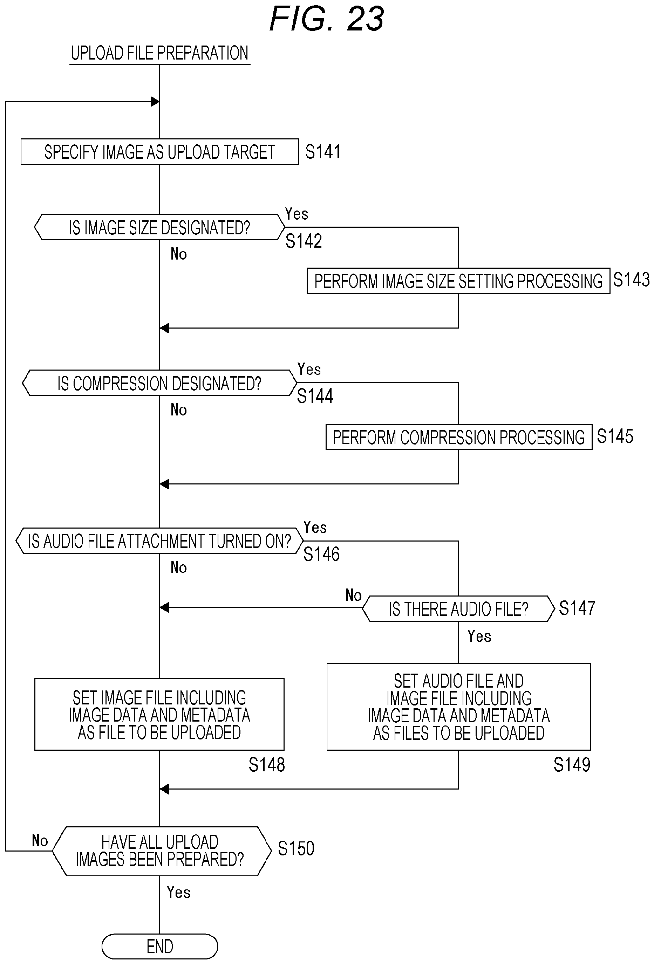

This upload file preparation processing is illustrated in detail in Fig. 23.

In step S141 in Fig. 23, the CPU 71 specifies one of the image files PF set as an upload target. This means that one of the image files PF transferred from the imaging apparatus 1 this time is to be subjected to the preparation processing.

When one image file PF is set as a processing target, the CPU 71 checks whether or not an image size is designated in step S142. This means that the user is to check contents set with the long-side pixel setting part 177 and the setting switch 174 on the automatic upload setting screen 57 of Fig. 20. When the image size is designated, the CPU 71 performs conversion processing of the number of pixels reflecting the designation, in step S143.

In step S144, the CPU 71 checks whether or not a compression rate is designated. This means that a designation state of the compression rate with the compression rate setting bar 176 on the automatic upload setting screen 57 of Fig. 20 is to be checked. When the compression rate is designated and compression is set to be performed, the CPU 71 performs compression processing using the designated compression rate in step S145.

In step S146, the CPU 71 checks whether or not the audio file AF is attached. That is, setting of whether or not to upload a voice memo of the user by turning ON/OFF the setting switch 172 of Fig. 20 is to be checked.

In a case where upload of the audio file AF is selected, the CPU 71 proceeds to step S147 and checks whether or not there is an associated audio file AF for the image file PF currently set as a processing target. In a case where there is the associated audio file AF, the CPU 71 proceeds to step S149 and sets, as files to be uploaded, the image file PF (image data and metadata) currently set as a processing target and the audio file AF.

In a case where it is confirmed in step S146 that upload of the audio file AF is not selected as setting by the user, or in a case where there is no associated audio file AF for the image file PF currently set as a processing target in step S147, the CPU 71 proceeds to step S148 and sets the image file PF (image data and metadata) currently set as a processing target, as a file to be uploaded.

In step S150, it is checked whether or not the preparation processing described above has been completed for all the image files PF imported this time from the imaging apparatus 1. In a case where there is a remaining image file PF, the CPU 71 returns to step S141, specifies one of the remaining image files PF as a processing target, and performs similar processing.

When the preparation processing described above is completed for all the image files PF imported this time from the imaging apparatus 1, it is determined that all the upload file images have been prepared in step S150, and the upload file preparation processing in Fig. 23 ends. Then, the CPU 71 proceeds to step S122 in Fig. 22.

In step S122, the CPU 71 performs a process of FTP connection and login to the FTP server 4 designated by the automatic upload setting.

Then, when the login is completed, the CPU 71 proceeds from step S123 to step S130 and executes FTP upload processing. That is, a process of sequentially performing FTP transmission of the image file PF and the audio file AF set to be uploaded in the upload file preparation processing is performed.

Note that, in a case where communication with the FTP server 4 has failed, or in a case where login has failed even though communication has succeeded, the CPU 71 proceeds from step S124 to step S125 as an error and performs predetermined error processing. For example, the user is notified of the error in the automatic upload processing. Then, a series of processing at the time of importing the image file PF from the imaging apparatus 1 is ended.

In a case where the FTP upload in step S130 is normally completed, the CPU 71 proceeds from step S131 to step S133, notifies the user of the completion, and ends the series of processing. In this case, it is considered that up to uploading to the FTP server 4 has been automatically performed at the time of importing the image file PF from the imaging apparatus 1.

Furthermore, when the voice memo automatic caption assignment function is ON, it is considered that voice memo text obtained by converting a voice memo of the associated audio file AF into text is added to the IPTC metadata, in the image file PF to be uploaded.

In a case where an error occurs in the upload processing to the FTP server 4 and normal completion has failed, the CPU 71 proceeds from step S132 to step S134 and performs predetermined error processing. For example, the user is notified of the error in the automatic upload processing. Then, a series of processing at the time of importing the image file PF from the imaging apparatus 1 is ended.

### <6. Processing example including conversion into text and caption editing>

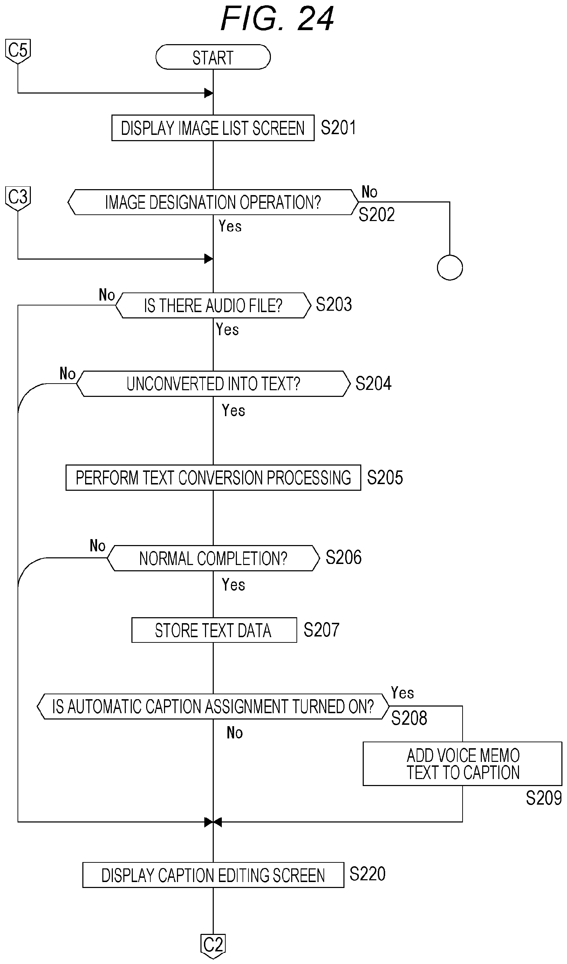

Next, a description is given to a processing example in a case where there is transition from a state where the image list screen 50 of Fig. 6 is displayed to the caption editing screen 52 of Fig. 7 and the like with reference to Figs. 24, 25, and 26.

Note that Figs. 24, 25, and 26 illustrate a series of flowcharts separately, and "c2", "c3", "c4", and "c5" indicate connection relationships.

In step S201 in Fig. 24, the CPU 71 controls to display the image list screen 50.

When the user performs an operation to designate a certain image on the image list screen 50 as described above, the caption editing screen 52 for image data is displayed. At this time, if a voice memo of the designated image data (the image file PF) has not yet been converted into text, conversion into text is performed in this opportunity.

When detecting the image designation operation by the user on the image list screen 50, the CPU 71 proceeds from step S202 to step S203.

In step S203, the CPU 71 checks whether or not there is an associated audio file AF for the designated image data (the image file PF).

If there is no associated audio file AF, the process proceeds to step S220, and the CPU 71 controls to display the caption editing screen 52 for the designated image data. In this case, since there is no voice memo, the voice memo field 133 may not be displayed on the caption editing screen 52.

In a case where there is the associated audio file AF, the CPU 71 proceeds to step S204 and checks whether or not the voice memo has already been converted into text and voice memo text has been stored. If the voice memo text has already been stored, the process proceeds to step S220, and the CPU 71 controls to display the caption editing screen 52 for the designated image data. In this case, as illustrated in Fig. 7, the voice memo field 133 in which the voice memo text is to be displayed is displayed in the voice memo text area 134. Furthermore, if the automatic caption assignment function has been turned ON and the voice memo text has been inserted into caption data, the voice memo text has also been added to the caption data in the caption field 132 as illustrated in Fig. 11.

In a case where it is determined that there is a voice memo but the voice memo has not been converted into text, the CPU 71 proceeds to step S205 and performs the text conversion processing on the voice memo of the audio file AF associated with the designated image file PF. For example, audio data as the voice memo is transmitted to the text conversion engine 5, and data converted into text is received. Alternatively, in a case where the text conversion engine 83 is mounted in the information processing apparatus 2, the text conversion processing may be performed by the text conversion engine 83.

In a case where the conversion into text is normally performed and voice memo text has been successfully acquired, the CPU 71 proceeds from step S206 to step S207, and performs a process of storing the voice memo text into the storage unit 79, for example, as the voice memo text corresponding to the image file PF as a processing target.

In step S208, the CPU 71 checks whether or not the automatic caption assignment function is turned ON. That is, it is a function that enables the user to freely set ON/OFF on the voice memo automatic caption assignment setting screen 53 of Fig. 16.

When the automatic caption assignment function is not ON, the CPU 71 proceeds to step S220. In this case, the voice memo field 133 is displayed as illustrated in Fig. 7 on the caption editing screen 52, and caption data inputted by that time is displayed in the caption field 132.

Whereas, when the automatic caption assignment function is ON, the CPU 71 proceeds to step S209 and performs a process of inserting the voice memo text into the caption data. That is, a process of writing the voice memo text into the description/caption field in the IPTC metadata is performed. As described above, in a case where caption data has already been written in the description/caption field, the CPU 71 is to write the voice memo text thereafter.

After performing such automatic caption assignment processing, the CPU 71 proceeds to step S220. In this case, the caption editing screen 52 is in a state where the voice memo text has also been added to the caption data in the caption field 132 as illustrated in Fig. 11.

In a case where the conversion into text in step S205 has not been normally performed, the CPU 71 proceeds from step S206 to step S220. In this case, since conversion of the voice memo into text has failed, it is conceivable not to display the voice memo field 133 on the caption editing screen 52. However, it is conceivable to clearly indicate the presence of the voice memo to the user by the voice memo mark 105.

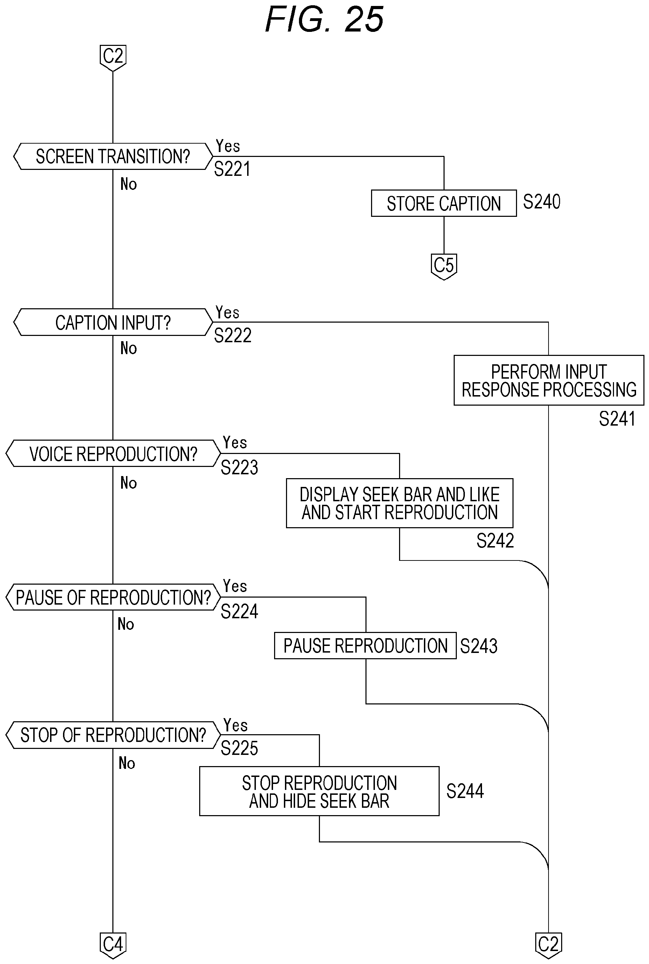

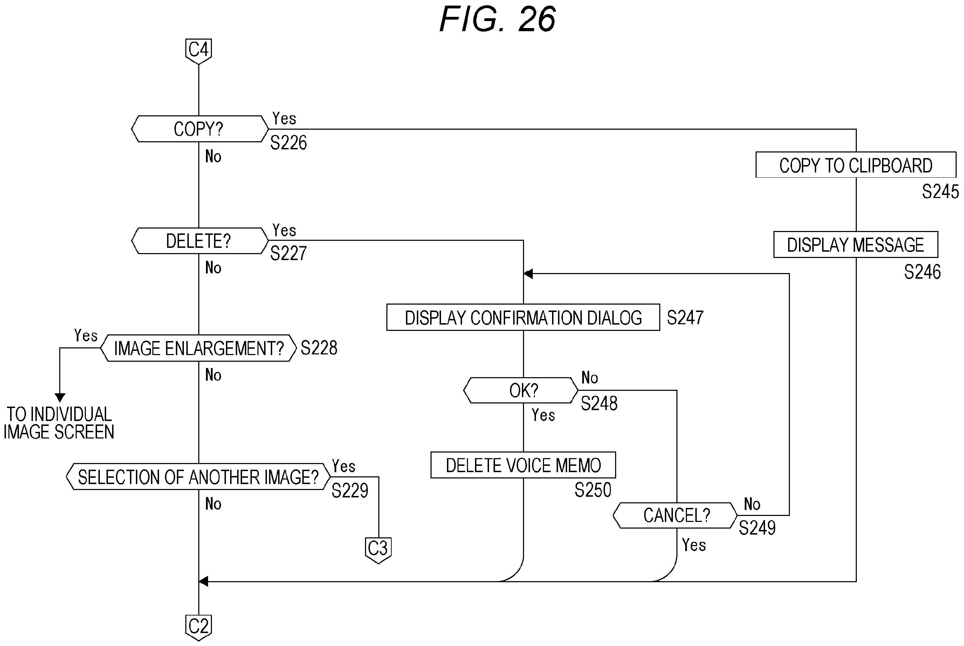

In a state where the caption editing screen 52 is displayed, the process of the CPU 71 proceeds to step S221 in Fig. 25. The CPU 71 monitors various user operations on the caption editing screen 52. That is, each operation is monitored in a loop of steps S221, S222, S223, S224, and S225 and steps S226, S227, S228, and S229 in Fig. 26.

In step S221 in Fig. 25, the CPU 71 monitors screen transition by the return button 106, that is, an operation of transition to the image list screen 50. In a case where this operation is detected, the CPU 71 performs caption saving processing in step S240, and returns to step S201 in Fig. 24. That is, caption data displayed in the caption field 132 at that time is stored as data of the description/caption field in the IPTC metadata.

In step S222, the CPU 71 monitors an operation related to caption input. In response to an operation related to caption input, such as character input or voice input, or template request, the CPU 71 performs response processing in step S241.

That is, calling and displaying of a template according to an operation of the template button 138 of the user operation, displaying of the keyboard 169 in accordance with a tap operation or the like of the user on the caption field 132, character input into the caption field 132 according to an operation of the keyboard 169, and the like are performed. Furthermore, there is also a case where audio input processing according to the operation of the voice input button 139 by the user is performed.

The CPU 71 continuously monitors other operations while sequentially performing such caption input response processing in step S241.

In step S223, the CPU 71 monitors an operation on the reproduction button 135 by the user. In a case where the operation on the reproduction button 135 is detected, the CPU 71 proceeds to step S242, and performs control to set the voice memo field 133 to a display state of the seek bar 160, the current time 161, the total reproduction length 162, the stop button 163, the pause button 164, and the like during reproduction as illustrated in Fig. 9, and to start audio reproduction.

In step S224, the CPU 71 monitors an operation on the pause button 164 by the user. In a case where the operation on the pause button 164 is detected, the CPU 71 proceeds to step S243 and performs control to pause audio reproduction. Although not illustrated, in this case, the pause button 164 is switched to display of the reproduction button 135.

In step S225, the CPU 71 monitors an operation on the stop button 163 by the user. In a case where the operation on the stop button 163 is detected, the CPU 71 proceeds to step S244 and performs control to stop audio reproduction. In this case, the display of the voice memo field 133 is to be returned to a state of Fig. 7.

In step S226 in Fig. 26, the CPU 71 monitors an operation on the copy button 136 by the user. In a case where the operation on the copy button 136 is detected, the CPU 71 proceeds to step S245 and performs a process of copying voice memo text to the clipboard. Then, in step S246, the CPU 71 displays the copy message 168 of Fig. 11 for a predetermined time or until a time when the next user operation is detected.

Note that, in a case where the CPU 71 subsequently detects a paste operation in step S222, the voice memo text copied to the clipboard is to be pasted as caption data in step S241.

In step S227, the CPU 71 monitors an operation on the delete button 137 by the user. In a case where the operation on the delete button 137 is detected, the CPU 71 proceeds to step S247 and controls to display the confirmation dialog 61 of Fig. 10. When the user operates the OK button 165, the CPU 71 proceeds from step S248 to step S250 and performs deletion processing related to the voice memo. In a case where the user operates the cancel button 166 on the confirmation dialog 61, the CPU 71 does not execute the deletion processing, proceeds from step S248 to step S228, and returns to the monitoring of the user operation.

In step S228, the CPU 71 monitors an image enlargement operation. For example, when the image enlargement operation is performed as a pinch operation or double-tap on the thumbnail image 103, the individual image screen 51 of Fig. 8 is displayed.

Although not illustrated in the flowchart, after the transition to the individual image screen 51, a different image is selected in accordance with a predetermined operation, the screen returns to the image list screen 50, or the transition is made to the caption editing screen 52.

In step S229, the CPU 71 monitors a selection operation on another image. That is, an operation on the feed button 107 on the caption editing screen 52 is monitored. When detecting the operation of the feed button 107, the CPU 71 proceeds to step S203 in Fig. 24. That is, in a case where the previous or subsequent image is newly designated, the processes from step S203 to step S209 are performed on the designated image data in a similar manner as described above, and the caption editing screen 52 is displayed for the image data in step S220.

When one piece of image data is designated as described above, there is a case where the text conversion processing and the automatic caption assignment function processing are performed. Furthermore, on the caption editing screen 52, display, reproduction, deletion, copying, and pasting to caption data of the voice memo text, caption input by manual or voice, and the like can be performed.

### <7. Processing example at time of uploading>

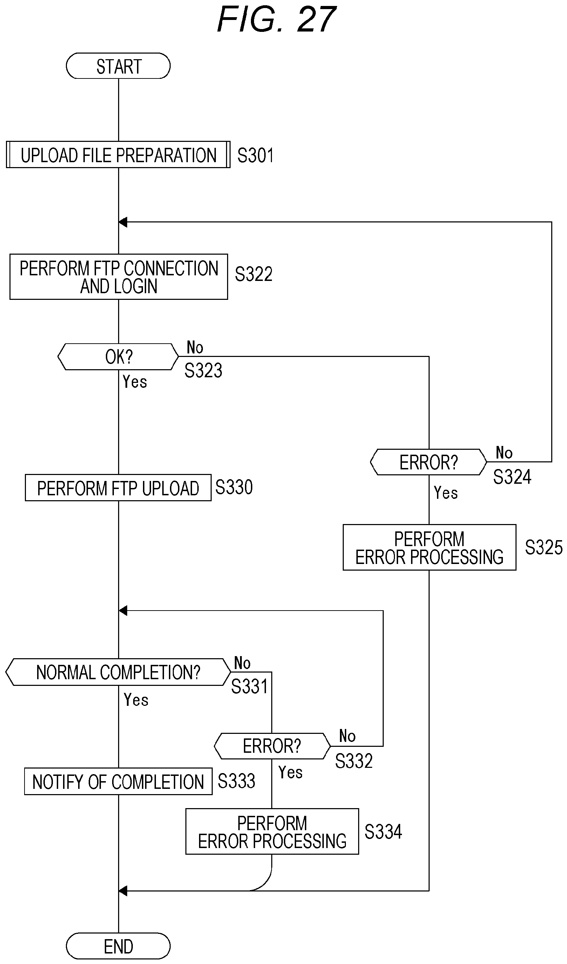

Fig. 27 illustrates processing at a time of uploading to the FTP server 4. The upload processing of Fig. 27 is started, for example, when the image file PF to be uploaded or the FTP server 4 as an upload destination is designated by the user, and an instruction of upload execution is given.

The CPU 71 performs upload file preparation processing in step S301. This is similar to the process of Fig. 23 described above.

In step S322, the CPU 71 performs a process of FTP connection and login to the FTP server 4 as the upload destination designated by the user.

Then, when the login is completed, the CPU 71 proceeds from step S323 to step S330 and executes the FTP upload processing. That is, a process of sequentially performing FTP transmission of the image file PF and the audio file AF set to be uploaded in the upload file preparation processing is performed.

Note that, in a case where communication with the FTP server 4 has failed, or in a case where login has failed even though communication has succeeded, the CPU 71 proceeds from step S324 to step S325 as an error and performs predetermined error processing. For example, the user is notified of the error in the upload processing. Then, the upload processing ends with an error.

In a case where the FTP upload in step S330 is normally completed, the CPU 71 proceeds from step S331 to step S333, notifies the user of the completion, and ends the upload processing.

In the uploaded image file PF, a state is assumed where the voice memo text is reflected as caption data in the IPTC metadata by the automatic caption assignment function or the user's copy and paste operation.

Furthermore, a case where the audio file AF is uploaded together in accordance with setting of the user is also assumed.

In a case where an error occurs in the upload processing to the FTP server 4 and normal completion has failed, the CPU 71 proceeds from step S332 to step S334 and performs predetermined error processing. For example, the user is notified of the error in the upload processing. Then, the upload processing ends with an error.

### <8. Conclusion and modification>

In the embodiment described above, the following effects can be obtained.

The information processing apparatus 2 according to the embodiment includes the text acquisition unit 33 configured to acquire voice memo text that is text data obtained by converting audio data as a voice memo into text. Furthermore, the information processing apparatus 2 includes the data management unit 34 configured to perform a process of receiving image data (the image file PF) and audio data (the audio file AF) related to the image data, which are transmitted from the imaging apparatus 1, and then setting voice memo text acquired by the text acquisition unit 33 for the audio data as IPTC metadata corresponding to the image data.

As a result, as a voice memo to be associated with a captured image, information inputted by a camera operator or the like by voice can be included as text in the metadata corresponding to the image data, and contents of the voice memo can be extremely easily used.

For example, after uploading to the FTP server 4, a person who confirms an image can confirm the contents of the voice memo by text, and thus can know the annotation and the like by the camera operator without listening to the voice memo audio.

Furthermore, as a result, it is possible to inform of the contents of the voice memo even if there is no voice memo that is audio data. Therefore, for example, in a case where the voice memo is uploaded to the FTP server 4, the contents of the voice memo can be informed while a communication volume is reduced by not transmitting the voice memo.

Note that, although the IPTC metadata has been described as an example of the metadata, the metadata is not limited thereto as a matter of course. The metadata to be added to the image data may be metadata in any data format, and all or a part of the voice memo text is only required to be reflected in such metadata.

In the embodiment, an example has been given in which, in response to reception of image data and audio data related to the image data from the imaging apparatus 1, the text acquisition unit 33 performs the process of acquiring text data obtained by converting the audio data into text (see step S112 in Fig. 21).

For example, in a case where image data and audio data are transferred from the imaging apparatus 1, the text conversion processing is performed even if there is no particular user operation, with the reception of the image data and the audio data as a trigger.

As a result, contents of a voice memo can be presented as text data regardless of the operation of the user of the information processing apparatus 2 after the transfer. The user can confirm contents of a voice memo of each captured image without performing audio reproduction.

Note that, in the process of Fig. 21, an example has been adopted in which retry is not performed even if an error occurs in the text conversion processing at a time of transfer. This assumes an effect of simplifying processing at the time of transfer, in consideration of circumstances that there is an opportunity of the text conversion processing as in step S205 in Fig. 24 thereafter, and there is no opportunity for text display in the information processing apparatus 2 in a case where the image is not opened.

In the embodiment, an example has been given in which the text acquisition unit 33 performs the process of acquiring text data obtained by converting the audio data into text in accordance with the operation of designating image data (see step S205 in Fig. 24).

For example, in the information processing apparatus 2, the text conversion processing is performed with, as a trigger, execution of an operation of designating image data imported from the imaging apparatus 1.

This is a case where some processing related to the image data, for example, caption editing or the like is performed depending on the operation of designating the image imported in the information processing apparatus 2. Therefore, contents of a voice memo can be presented to the user as text data if conversion into text is performed at this time. The user can confirm contents of a voice memo of each captured image without performing audio reproduction.

In the embodiment, an example has been given in which the data management unit 34 discriminates audio data to be associated with image data, in accordance with a reception order of image data and audio data (step S102 in Fig. 21).

For example, it is determined in advance that, in a case where there is a voice memo regarding image data, the imaging apparatus 1 transmits the audio file AF as the voice memo before the image file PF including the image data and metadata. As a result, in a case where the audio file AF is received, the information processing apparatus 2 can determine that the audio file AF is the audio file AF of the voice memo associated with the image file PF to be received next. As a result, it is possible to manage the image file PF and the audio file AF in association with each other without particularly confirming association information or the like.

In the embodiment, an example has been given in which the data management unit 34 discriminates audio data to be associated with image data by using metadata added to the image data.

Information is described in advance in metadata, for the imaging apparatus 1 to specify the audio file AF as an associated voice memo, for example, in a case where there is the voice memo regarding image data. As a result, the information processing apparatus 2 can manage the transferred image file PF and audio file AF in association with each other.

In the embodiment, an example has been given in which the data management unit 34 performs the process of adding text data for audio data as a part of caption data in metadata added to associated image data.

For example, text data obtained by converting contents of a voice memo into text is to be described in the description/caption field in IPTC metadata.

This is executed by the user's copy and paste operation (step S241 in Fig. 25), for example, or automatically performed in accordance with conversion into text (step S116 in Fig. 21 and step S209 in Fig. 24) .

As a result, text data can be utilized as a part or all of a caption for a captured image. If the contents of the voice memo are contents of a caption desired to be added as they are, the user can easily complete caption input by, for example, the copy and paste operation and the like on the caption editing screen 52. Alternatively, a state can be made in which the caption has been already inputted even if the user does not input the caption. As a result, caption input until uploading to the FTP server 4 can be prevented from being troublesome.

In the embodiment, an example has been given in which the data management unit 34 performs a process of, in response to acquisition of text data for audio data, automatically adding the text data as a part of caption data in metadata added to associated image data.

For example, text data obtained by converting contents of a voice memo into text is to be automatically described in the description/caption field in the IPTC metadata (step S116 in Fig. 21 and step S209 in Fig. 24).

As a result, for example, caption input on the caption editing screen 52 can be made unnecessary for the user, or can be made to be a degree of slight additional input.

Furthermore, considering the automatic upload, when text data is automatically set as caption data in the IPTC metadata, the contents of the voice memo can be confirmed by using the caption data also on the FTP server 4 side. Therefore, it becomes extremely convenient to inform of information regarding an image from the camera operator to a staff on the FTP server 4 side.

In the embodiment, an example has been given in which the data management unit 34 adds text data after caption data that has already been inputted.

By describing the caption data after the end of the already existing caption data in a case of automatically adding text data to the description/caption field in the IPTC metadata, the already existing caption data can be prevented from being wasted.

In the embodiment, an example has been given in which the UI control unit 31 provides a user interface environment that allows turning ON/OFF of the process of automatically adding text data obtained by converting audio data into text as a part of caption data in metadata added to image data.

The user can freely set whether or not to automatically add text data to a caption in accordance with a usage situation, by turning ON/OFF the voice memo automatic caption assignment in Fig. 16. Therefore, the voice memo can be selectively used in accordance with the purpose of use of the voice memo and the like. For example, it is possible not to include the contents of the voice memo in the caption data in a case where the contents of the voice memo are desired to be a personal memo of the camera operator and the like.

In the embodiment, a description has been given in which there is provided the upload processing unit 35 configured to perform the process of uploading image data and metadata to the FTP server 4 after the data management unit 34 performs a process of setting text data acquired for audio data by the text acquisition unit as the metadata corresponding to the image data.

The upload is performed as the process of Fig. 22 (and Fig. 23) or the process of Fig. 26 (and Fig. 23).

In this case, text data obtained by converting a voice memo into text is to be included in an image file to be uploaded. Therefore, a person who confirms the image file uploaded on the FTP server 4 side can confirm the contents of the voice memo by the text, and can know the annotation and the like by the camera operator without listening to the voice memo voice.

In the embodiment, a description has been given in which there is a case where the upload processing unit 35 performs the process of uploading audio data to the FTP server 4 in addition to the image data and the metadata.

In the upload file preparation processing of Fig. 23, the audio file is also set as an upload target in step S149. As a result, the voice memo itself is also uploaded, which is convenient in a case where it is desired to use the voice memo on the FTP server 4 side.

In the embodiment, a description has been given in which there is a case where the upload processing unit 35 performs the process of automatically uploading the image data and metadata to the FTP server 4, after the data management unit 34 performs the process of setting text data acquired for the audio data by the text acquisition unit 33 as the metadata corresponding to the image data.

For example, the automatic upload processing is performed in the processes in and after step S121 in Fig. 22. As a result, it is possible for the user to complete from transfer of an image file and the like from the imaging apparatus to uploading to the FTP server 4 with little effort. Furthermore, in this case, the text data obtained by converting the voice memo into text is also to be uploaded, so that the contents of the voice memo can be effectively used at the upload destination.

In the embodiment, an example has been given in which the UI control unit 31 provides a user interface environment that allows to set whether or not to automatically perform the process of uploading image data and metadata to the FTP server 4 after the voice memo text is added to the metadata.

The user can freely set whether or not to perform the automatic upload on the automatic FTP upload screen of Fig. 19 in accordance with a usage situation. Then, for example, in a case where the automatic FTP upload function is turned ON in step S120 in Fig. 22, the automatic upload processing is to be performed in the processes in and after step S121.

As a result, the user can execute the automatic upload according to a usage situation. For example, in a case where it is desired to additionally perform caption editing or the like, the automatic upload is only required to be turned OFF.

In the embodiment, a description has been given in which the UI control unit 31 provides a user interface environment that allows to set whether or not to further upload audio data.

The user can freely set whether or not to upload the audio file AF that is audio data as a voice memo on the automatic FTP upload screen of Fig. 20 in accordance with a usage situation. Then, for example, in step S146 in Fig. 23, whether or not the audio file AF is set as an upload target is determined by checking the setting.

As a result, the user can set handling of the audio file AF in accordance with a usage situation. For example, in a case where it is desired to use a voice memo as a personal memo, the voice memo is only required not to be uploaded. Conversely, in a case where a voice memo has been used as a notification to an upload destination or the like, it is sufficient to set the voice memo as an upload target.

In the embodiment, an example has been given in which the UI control unit 31 controls to display voice memo text after reception of image data and audio data related to the image data that are transmitted from the imaging apparatus 1.

For example, the UI control unit 31 controls to display voice memo text in the voice memo text area 134 of the voice memo field 133 on the caption editing screen 52 of Fig. 7.

As a result, the user can confirm contents of the voice memo without audio reproduction, and efficiency of work up to uploading is improved.

An example has been adopted in which the UI control unit 31 of the embodiment provides a user interface environment for audio reproduction to be executed for the audio data.

For example, the UI control unit 31 controls to display the reproduction button 135 in the voice memo field 133 on the caption editing screen 52 of Fig. 7 to enable the user to perform a reproduction operation. Then, audio reproduction is executed in a state of Fig. 9 in accordance with the reproduction operation (step S242 in Fig. 25).

As a result, the user can confirm the contents of the voice memo through the audio. Even in a case where conversion into text cannot be performed, the contents of the voice memo can be confirmed.

In the embodiment, various types of equipment are assumed as the information processing apparatus 2, but in particular, a portable terminal device such as a smartphone or tablet equipment is desirable.

When the information processing apparatus 2 is a portable terminal device such as a smartphone or tablet equipment, the camera operator can easily construct an environment in which FTP setting information is transferred to the imaging apparatus 1 by using the information processing apparatus 2 and uploaded from the imaging apparatus 1 to the FTP server 4 at an event venue, a news gathering site, or the like.

Furthermore, in the embodiment, an example has been described in which the information processing apparatus 2 imports the image file PF and the audio file AF transferred from the imaging apparatus 1 and converts a voice memo into voice memo text. However, the voice memo to be subjected to such processing is not necessarily directly transferred from the imaging apparatus 1. For example, even in a case where the image file PF and the audio file AF from the imaging apparatus 1 are transferred to another piece of equipment and then further transferred from the another piece of equipment to the information processing apparatus 2, each of the processes described above can be performed.

That is, in the information processing apparatus 2, each of the processes described above is only required to be performed as a process after reception of the audio data transmitted from external equipment.

Furthermore, in a case where image data and, for example, audio data as a voice memo are transferred from an image reproducing device, an editing device, another information processing apparatus, or the like instead of the imaging apparatus 1, it is also conceivable that the information processing apparatus 2 performs the above-described voice memo text conversion, display, FTP upload, and the like.

A program according to the embodiment is a program for causing, for example, a CPU, a DSP, or the like, or a device including the CPU, the DSP, or the like to execute the process of Figs. 21 to 27.

That is, the program of the embodiment is a program for causing an information processing apparatus to execute: text conversion processing of acquiring text data obtained by converting audio data into text; and a process of receiving image data and audio data related to the image data that are transmitted from the imaging apparatus 1, and then setting text data acquired for the audio data by the text conversion processing as metadata corresponding to the image data.

Such a program enables the information processing apparatus 2 described above to be implemented, for example, in a portable terminal device, a personal computer, or other equipment capable of executing information processing.

The program for implementing such an information processing apparatus 2 can be recorded in advance in an HDD as a recording medium built in equipment such as a computer device, a ROM in a microcomputer having a CPU, or the like.

Alternatively, furthermore, the program can be stored (recorded) temporarily or permanently, in a removable recording medium such as a flexible disc, a compact disc read only memory (CD-ROM), a magneto optical (MO) disc, a digital versatile disc (DVD), a Blu-Ray disc (registered trademark), a magnetic disc, a semiconductor memory, or a memory card. Such a removable recording medium can be provided as so-called package software.

Furthermore, such a program can be installed from a removable recording medium to a personal computer or the like, or can also be downloaded from a download site via a network such as a local area network (LAN) or the Internet.

Furthermore, such a program is suitable for providing the information processing apparatus 2 according to the embodiment in a wide range. For example, by downloading the program to a portable terminal device such as a smartphone or a tablet, a mobile phone, a personal computer, game equipment, video equipment, a personal digital assistant (PDA), or the like, the smartphone or the like can be caused to function as the information processing apparatus 2 of the present disclosure.

Note that the effects described in this specification are merely examples and are not limited, and additional effects may be present.

Note that the present technology can also have the following configurations.
(1) An information processing apparatus including:
   a text acquisition unit configured to acquire text data obtained by converting audio data into text; and
   a data management unit configured to perform a process of receiving image data and audio data related to the image data that are transmitted from an external device, and then setting text data acquired for the audio data by the text acquisition unit as metadata corresponding to the image data.
(2) The information processing apparatus according to (1) described above, in which
   in response to reception of image data and audio data related to the image data, the text acquisition unit performs a process of acquiring text data obtained by converting the audio data into text.
(3) The information processing apparatus according to (1) or (2) described above, in which
   the text acquisition unit performs a process of acquiring text data obtained by converting the audio data into text, in response to an operation of designating image data.
(4) The information processing apparatus according to any one of (1) to (3) described above, in which
   the data management unit discriminates audio data to be associated with image data, in accordance with a reception order of image data and audio data.
(5) The information processing apparatus according to any one of (1) to (3) described above, in which
   the data management unit discriminates audio data to be associated with image data, by using metadata added to the image data.
(6) The information processing apparatus according to any one of (1) to (5) described above, in which
   the data management unit performs a process of adding text data for audio data as a part of caption data in metadata added to associated image data.
(7) The information processing apparatus according to any one of (1) to (6) described above, in which
   the data management unit performs a process of, in response to acquisition of text data for audio data, automatically adding the text data as a part of caption data in metadata added to associated image data.
(8) The information processing apparatus according to (7) described above, in which
   the data management unit adds text data after caption data that has already been inputted.
(9) The information processing apparatus according to (7) or (8) described above, further including:
   a user interface control unit configured to provide a user interface environment that allows turning ON/OFF of a process of automatically adding text data obtained by converting audio data into text as a part of caption data in metadata added to image data.
(10) The information processing apparatus according to any one of (1) to (9) described above, further including:
   an upload processing unit configured to perform a process of uploading the image data and metadata to a server device, after the data management unit performs a process of setting text data acquired for the audio data by the text acquisition unit as the metadata corresponding to the image data.
(11) The information processing apparatus according to (10) described above, in which
   the upload processing unit performs a process of uploading the audio data to the server device in addition to the image data and the metadata.
(12) The information processing apparatus according to (10) or (11) described above, in which
   the upload processing unit performs a process of automatically uploading the image data and metadata to the server device, after the data management unit performs a process of setting text data acquired for the audio data by the text acquisition unit as the metadata corresponding to the image data.
(13) The information processing apparatus according to (12) described above, further including:
   a user interface control unit configured to provide a user interface environment that allows to set whether or not the upload processing unit automatically performs a process of uploading the image data and metadata to the server device, after the data management unit performs a process of setting text data acquired for the audio data by the text acquisition unit as the metadata corresponding to the image data.
(14) The information processing apparatus according to (13) described above, in which
   the user interface control unit provides a user interface environment that allows to set whether or not to further upload audio data.
(15) The information processing apparatus according to any one of (1) to (14) described above, further including:
   a user interface control unit configured to control to display text data acquired for the audio data by the text acquisition unit.
(16) The information processing apparatus according to (15) described above, in which
   the user interface control unit provides a user interface environment for audio reproduction to be executed for the audio data.
(17) The information processing apparatus according to any one of (1) to (16) described above, in which
   the information processing apparatus is a portable terminal device.
(18) An information processing method executed by an information processing apparatus, the information processing method including:
   text data acquisition processing of acquiring text data obtained by converting audio data into text; and
   a process of receiving image data and audio data related to the image data that are transmitted from an external device, and then setting text data acquired for the audio data by the text data acquisition processing as metadata corresponding to the image data.
(19) A program for causing an information processing apparatus to execute:
   text conversion processing of acquiring text data obtained by converting audio data into text; and
   a process of receiving image data and audio data related to the image data that are transmitted from an external device, and then setting text data acquired for the audio data by the text conversion processing as metadata corresponding to the image data.

### REFERENCE SIGNS LIST

- 1: Imaging apparatus
- 2: Information processing apparatus
- 4: FTP server
- 5: Text conversion engine
- 6: Network
- 31: UI control unit
- 32: Communication control unit
- 33: FTP setting management unit
- 34: Image management unit
- 35: Upload processing unit
- 50: Image list screen
- 51: Individual image screen
- 52: Caption editing screen
- 53: Voice memo automatic caption assignment setting screen
- 55: Menu screen
- 56: Setting screen
- 57: Automatic upload setting screen
- 71: CPU
- 79: Storage unit
- 80: Communication unit
- 83: Text conversion engine

## Claims

1. An information processing apparatus comprising:
a text acquisition unit configured to acquire text data obtained by converting audio data into text; and
a data management unit configured to perform a process of receiving image data and audio data related to the image data that are transmitted from an external device, and then setting text data acquired for the audio data by the text acquisition unit as metadata corresponding to the image data.

2. The information processing apparatus according to claim 1, wherein
in response to reception of image data and audio data related to the image data, the text acquisition unit performs a process of acquiring text data obtained by converting the audio data into text.

3. The information processing apparatus according to claim 1, wherein
the text acquisition unit performs a process of acquiring text data obtained by converting the audio data into text, in response to an operation of designating image data.

4. The information processing apparatus according to claim 1, wherein
the data management unit discriminates audio data to be associated with image data, in accordance with a reception order of image data and audio data.

5. The information processing apparatus according to claim 1, wherein
the data management unit discriminates audio data to be associated with image data, by using metadata added to the image data.

6. The information processing apparatus according to claim 1, wherein
the data management unit performs a process of adding text data for audio data as a part of caption data in metadata added to associated image data.

7. The information processing apparatus according to claim 1, wherein
the data management unit performs a process of, in response to acquisition of text data for audio data, automatically adding the text data as a part of caption data in metadata added to associated image data.

8. The information processing apparatus according to claim 7, wherein
the data management unit adds text data after caption data that has already been inputted.

9. The information processing apparatus according to claim 7, further comprising:
a user interface control unit configured to provide a user interface environment that allows turning ON/OFF of a process of automatically adding text data obtained by converting audio data into text as a part of caption data in metadata added to image data.

10. The information processing apparatus according to claim 1, further comprising:
an upload processing unit configured to perform a process of uploading the image data and metadata to a server device, after the data management unit performs a process of setting text data acquired for the audio data by the text acquisition unit as the metadata corresponding to the image data.

11. The information processing apparatus according to claim 10, wherein
the upload processing unit performs a process of uploading the audio data to the server device in addition to the image data and the metadata.

12. The information processing apparatus according to claim 10, wherein
the upload processing unit performs a process of automatically uploading the image data and metadata to the server device, after the data management unit performs a process of setting text data acquired for the audio data by the text acquisition unit as the metadata corresponding to the image data.

13. The information processing apparatus according to claim 12, further comprising:
a user interface control unit configured to provide a user interface environment that allows to set whether or not the upload processing unit automatically performs a process of uploading the image data and metadata to the server device, after the data management unit performs a process of setting text data acquired for the audio data by the text acquisition unit as the metadata corresponding to the image data.

14. The information processing apparatus according to claim 13, wherein
the user interface control unit provides a user interface environment that allows to set whether or not to further upload audio data.

15. The information processing apparatus according to claim 1, further comprising:
a user interface control unit configured to control to display text data acquired for the audio data by the text acquisition unit.

16. The information processing apparatus according to claim 15, wherein
the user interface control unit provides a user interface environment for audio reproduction to be executed for the audio data.

17. The information processing apparatus according to claim 1, wherein
the information processing apparatus includes a portable terminal device.

18. An information processing method executed by an information processing apparatus, the information processing method comprising:
text data acquisition processing of acquiring text data obtained by converting audio data into text; and
a process of receiving image data and audio data related to the image data that are transmitted from an external device, and then setting text data acquired for the audio data by the text data acquisition processing as metadata corresponding to the image data.

19. A program for causing an information processing apparatus to execute:
text conversion processing of acquiring text data obtained by converting audio data into text; and
a process of receiving image data and audio data related to the image data that are transmitted from an external device, and then setting text data acquired for the audio data by the text conversion processing as metadata corresponding to the image data.
